(19) Europäisches Patentamt / European Patent Office / Office européen des brevets

(11) **EP 3 966 747 B1**

(12) **EUROPEAN PATENT SPECIFICATION**

(45) Date of publication and mention
of the grant of the patent:
**30.04.2025 Bulletin 2025/18**

(21) Application number: **20865553.0**

(22) Date of filing: **13.08.2020**

(51) International Patent Classification (IPC):
*G06N 3/092* (2023.01)      *G06N 3/082* (2023.01)
*G06N 20/00* (2019.01)      *G06F 9/50* (2006.01)
*G06N 3/044* (2023.01)      *G06N 3/045* (2023.01)
*G06N 5/01* (2023.01)      *G06N 3/084* (2023.01)
*G06N 7/01* (2023.01)

(52) Cooperative Patent Classification (CPC):
**G06F 9/5027; G06N 3/044; G06N 3/045;
G06N 3/082; G06N 3/092; G06N 5/01; G06N 20/00;**
G06F 2209/501; G06N 3/084; G06N 7/01

(86) International application number:
**PCT/KR2020/010741**

(87) International publication number:
**WO 2021/054614 (25.03.2021 Gazette 2021/12)**

(54) **ELECTRONIC DEVICE AND METHOD FOR CONTROLLING THE ELECTRONIC DEVICE THEREOF**

ELEKTRONISCHE VORRICHTUNG UND VERFAHREN ZUR STEUERUNG DER ELEKTRONISCHEN VORRICHTUNG

DISPOSITIF ÉLECTRONIQUE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.09.2019 GB 201913353
19.03.2020 KR 20200034093**

(43) Date of publication of application:
**16.03.2022 Bulletin 2022/11**

(73) Proprietor: **Samsung Electronics Co., Ltd.**
**Suwon-si, Gyeonggi-do 16677 (KR)**

(72) Inventors:
• **ABDELFATTAH, Mohamed S.**
**Staines, Middlesex TW18 4QE (GB)**
• **DUDZIAK, Lukasz**
**Staines, Middlesex TW18 4QE (GB)**
• **CHAU, Chun Pong**
**Staines, Middlesex TW18 4QE (GB)**
• **KIM, Hyeji**
**Staines, Middlesex TW18 4QE (GB)**

• **LEE, Royson**
**Staines, Middlesex TW18 4QE (GB)**
• **BHATTACHARYA, Sourav**
**Staines, Middlesex TW18 4QE (GB)**

(74) Representative: **Appleyard Lees IP LLP**
**15 Clare Road**
**Halifax HX1 2HY (GB)**

(56) References cited:
**WO-A1-2018/124707      WO-A1-2019/112959
US-A1- 2019 050 265**

• **WEIWEN JIANG ET AL: "Hardware/Software Co-Exploration of Neural Architectures",
ARXIV.ORG, CORNELL UNIVERSITY LIBRARY,
201 OLIN LIBRARY CORNELL UNIVERSITY
ITHACA, NY 14853, 6 July 2019 (2019-07-06),
XP081440298**

**(Cont. next page)**

- WEIWEN JIANG ET AL: "Accuracy vs. Efficiency: Achieving Both through FPGA-Implementation Aware Neural Architecture Search", ARXIV.ORG, CORNELL UNIVERSITY LIBRARY, 201 OLIN LIBRARY CORNELL UNIVERSITY ITHACA, NY 14853, 31 January 2019 (2019-01-31), XP081013119
- AHMAD SHAWAHNA ET AL: "FPGA-based Accelerators of Deep Learning Networks for Learning and Classification: A Review", ARXIV.ORG, CORNELL UNIVERSITY LIBRARY, 201 OLIN LIBRARY CORNELL UNIVERSITY ITHACA, NY 14853, 1 January 2019 (2019-01-01), XP081010484, DOI: 10.1109/ACCESS.2018.2890150
- HYOUKJUN KWON ET AL: "HERALD: Optimizing Heterogeneous DNN Accelerators for Edge Devices", ARXIV.ORG, CORNELL UNIVERSITY LIBRARY, 201 OLIN LIBRARY CORNELL UNIVERSITY ITHACA, NY 14853, 13 September 2019 (2019-09-13), XP081482638
- HYOUKJUN KWON; LIANGZHEN LAI; TUSHAR KRISHNA; VIKAS CHANDRA: "HERALD: Optimizing Heterogeneous DNN Accelerators for Edge Devices", ARXIV.ORG, CORNELL UNIVERSITY LIBRARY, 201 OLIN LIBRARY CORNELL UNIVERSITY ITHACA, NY 14853, 13 September 2019 (2019-09-13), 201 Olin Library Cornell University Ithaca, NY 14853, XP081482638
- HUYNH THANG VIET: "Deep neural network accelerator based on FPGA", 2017 4TH NAFOSTED CONFERENCE ON INFORMATION AND COMPUTER SCIENCE, IEEE, 24 November 2017 (2017-11-24), pages 254 - 257, XP033255822, DOI: 10.1109/NAFOSTED.2017.8108073

**Description**

[Technical Field]

The disclosure relates to an electronic device and a method for controlling thereof and, for example, to an electronic device for determining a pair of accelerators and a neural network capable of outputting optimal accuracy and efficiency metrics and a method for controlling thereof.

[Background Art]

FPGA accelerator are especially useful at low-batch DNN inference tasks, in custom hardware (HW) configurations, and when tailored to specific properties of a DNN such as sparsity or custom precision. One of the FPGA strengths is that the HW design cycle is relatively short when compared to custom application-specific integrated circuits (ASICs). However, this strength comes with an interesting side effect: FPGA accelerator HW is typically designed after the algorithm (e.g., DNN) is decided and locked down.

Even if the accelerator is software-programmable, its HW is usually overoptimized for a specific DNN to maximize its efficiency. As a result, different DNNs are typically inefficient with the same HW. To address this "over optimization" problem, FPGA designs are typically configurable at the HW level. In this case, when a new DNN is discovered, the accelerator parameters can be tuned to the new DNN to maximize the HW efficiency. Even with the HW configurability, FPGA accelerators have the disadvantage of always needing to catch up to new DNNs.

The way of designing a DNN may be automated and may be termed neural architecture search (NAS). NAS has been successful in discovering DNN models that achieve state-of-the-art accuracy on image classification, super-resolution, speech recognition and machine translation.

A further development termed FNAS is described in "Accuracy vs. Efficiency: Achieving Both Through FPGA-Implementation Aware Neural Architecture Search" by Jiang et al, published in arXiv e-prints (Jan., 2019). FNAS is a HW-aware NAS which has been used in an attempt to discover DNNs that minimize latency on a given FPGA accelerator. FNAS is useful in discovering convolutional neural networks (CNNs) that are suited to a particular FPGA accelerator. Other HW-aware NAS adds latency to the reward function so that discovered models optimize both accuracy and inference latency, for example, when running on mobile devices. Weiwen Jiang et al: "Hardware/Software Co-Exploration of Neural Architectures" discloses a hardware and software co-exploration framework for efficient neural architecture search (NAS).

It is also noted that for CPUs and GPUs, the algorithm is optimized to fit the existing HW, and for successful ASICs, it is necessary to build-in a lot of flexibility and programmability to achieve some future-proofing accuracy.

[Disclosure]

[Technical Solution]

The invention is set out in independent claims 1 and 10. Preferred aspects of the invention are set out in the dependent claims.

[Description of Drawings]

The above and other aspects, features and advantages of certain embodiments of the present disclosure will be more apparent from the following detailed description, taken in conjunction with the accompanying drawings, in which:

Fig. 1 is a block diagram illustrating an example configuration and operation of an electronic device according to an embodiment;

Fig. 2 is a flowchart illustrating an example process for determining whether to implement a first neural network on a first accelerator through a first prediction model by an electronic device according to an embodiment;

Fig. 3 is a flowchart illustrating an example process for determining whether to select an accelerator for implementing the first neural network through a second prediction model by an electronic device according to an embodiment;

Figs. 4A, Fig. 4B and FIG. 4C include a flowchart and diagrams illustrating an example configuration and an example operation of an electronic device according to an embodiment;

Fig. 5 is a diagram illustrates an example well-defined CNN search space which can be used in the method of Fig. 4A according to an embodiment;

Fig. 6 is a diagram illustrating example components of an FPGA accelerator according to an embodiment;

Fig 7A is a graph illustrating area against resource usage for two types of accelerator architecture according to an embodiment;

Fig.7B is a graph illustrating latency per image against parallelism for the types of accelerator architecture shown in Fig. 7A according to an embodiment;

Fig. 8 is a graph illustrating latency numbers against size and pixel_par according to an embodiment;

Fig. 9 is a graph illustrating example Pareto-optimal points for accuracy, latency and area according to an embodiment;

Fig. 10 is a graph illustrating accuracy against latency for the Pareto-optimal points shown in Fig. 9 according to an embodiment;

Figs. 11A, 11B, 11C and 11D are graphs illustrating example accuracy-latency Pareto frontier for single and dual convolution engines at area constraints of less than 55 mm2, less than 70 mm2, less than 150 mm2 and less than 220 mm2 respectively according to an embodiment;

Fig. 12A is a graph illustrating accuracy against latency with a constraint imposed according to an embodiment;

Figs. 12B and 12C are diagrams illustrating example arrangements of a CNN selected from Fig. 12A according to an embodiment;

Fig. 12D is a diagram comparing the execution schedule for the CNN in Figure 12C run on its codesigned accelerator and a different accelerator according to an embodiment;

Fig. 13 is a graph illustrating accuracy against latency to show the overall landscape of Paretooptimal points with respect to the parameter ratio_conv_engines according to an embodiment;

Fig. 14 is a block diagram illustrating an example alternative architecture which may be used to implement phased searching according to an embodiment;

Fig. 15A is a graph illustrating accuracy against latency and highlights the top search results for an unconstrained search according to an embodiment;

Fig. 15B is a graph illustrating accuracy against latency and highlights the top search results for a search with one constraint according to an embodiment;

Fig. 15C is a graph illustrating accuracy against latency and highlights the top search results for a search with two constraints according to an embodiment;

Figures 16A, 16B and 16C are diagrams illustrating example reward values for each of the separate, combined and phased search strategies in the unconstrained and constrained searches of Figs. 15A, 15B and 15C according to an embodiment;

Fig. 17 is a graph illustrating top-1 accuracy against perf/area for various points searched using the combined search accoding to an embodiment;

Figs. 18A and 18B are diagrams illustrating example arrangements of a CNN selected from Fig. 15 according to an embodiment;

Figs. 19 and 20 are block diagrams illustrating example alternative architectures which may be used with the method of Fig. 4A or to perform a stand-alone search according to an embodiment;

Fig. 21 is a flowchart illustrating an example method which may be implemented on the architecture of Fig. 20 according to an embodiment; and

Fig. 22 is a flowchart illustrating an example alternative method which may be implemented on the architecture of Fig. 20 according to an embodiment.

[Best Mode]

Hereinbelow, the disclosure will be described in greater detail with reference to the attached drawings.

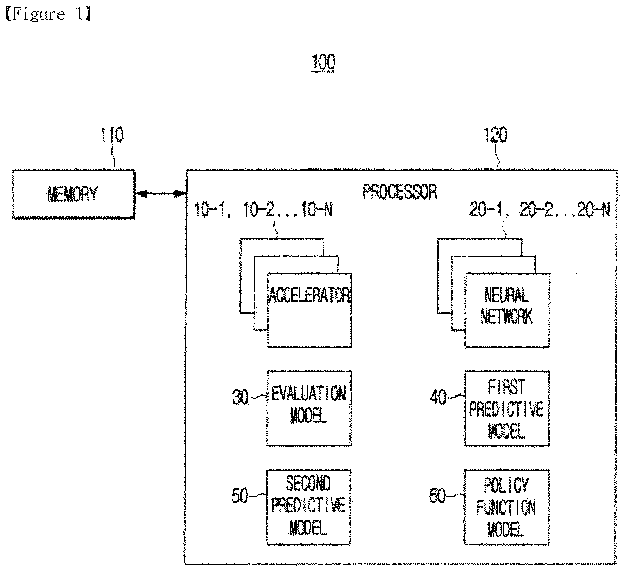

FIG. 1 is a block diagram illustrating an example configuration and operation of an electronic device 100, in accordance with an example embodiment of the disclosure. As shown in FIG. 1, the electronic device 100 may include a memory 110 and a processor (e.g., including processing circuitry) 120. However, the configuration shown in FIG. 1 is an example for implementing embodiments of the disclosure, and appropriate hardware and software configurations that would be apparent to a person skilled in the art may be further included in the electronic device 100.

The memory 110 may store instructions or data related to at least one other component of the electronic device 100. An instruction may refer, for example, to one action statement which can be executed by the processor 120 in a program creation language, and may be a minimum unit for the execution or operation of the program. The memory 110 may be accessed by the processor 120, and reading/writing/modifying/updating, or the like, data by the processor 120 may be performed.

The memory 110 may store a plurality of accelerators (e.g., including various processing circuitry and/or executable program elements) 10-1, 10-2, ⋯, 10-N and a plurality of neural networks (e.g., including various processing circuitry and/or executable program elements) 20-1, 20-2, ⋯, 20-N. The memory 110 may store an accelerator sub-search space including a plurality of accelerators 10-1, 10-2, ⋯, 10-N and a neural sub-search space including a plurality of neural networks 20-1, 20-2, ⋯, 20-N. The total search space may be defined by the following Equation 1.

【Equation 1】

$$S = S_{NN} \times S_{FGPA}$$

Where SNN is the sub-search space for the neural network, and the SFPGA is the sub-search space for the FPGA. If the accelerator is implemented as another type of accelerator rather than the FPGA, the memory 110 can store a sub-search space for searching and selecting an accelerator of the implemented type. The processor 120 may access each search space stored in the memory 110 to search and select a neural network or an accelerator. The related embodiment will be described below.

A neural network (or artificial neural network) may refer, for example, to a model capable of processing data input using an artificial intelligence (AI) algorithm. The neural network may include a plurality of layers, and the layer may refer to each step of the neural network. A plurality of layers included in a neural network have a plurality of weight values, and operations of a layer can be performed through operation result of a previous layer and an operation of a plurality of weights. The neural network may include a combination of several layers, and the layer may be represented by a plurality of weights. A neural network may include various processing circuitry and/or executable program elements.

Examples of neural networks may include, but are not limited to, a convolutional neural network (CNN), a deep neural network (DNN), a recurrent neural network (RNN), a restricted Boltzmann machine (RBM), a deep belief network (DBN), a bidirectional recurrent deep neural network (BRDNN), deep Q-networks, or the like. The CNN may be include different blocks selected from conv1x1, conv3x3 and pool3x3. As another example, the neural network may include a GZIP compression type neural network, which is an algorithm that includes two main computation blocks that perform LZ77 compression and Huffman encoding. The LZ77 calculation block includes parameters such as compression window size and maximum compression length. The Huffman computation block may have parameters such as Huffman tree size, tree update frequency, and the like. These parameters affect the end result of the GZIP string compression algorithm, and typically there may be a trade-off at the compression ratio and compression rate.

Each of the plurality of neural networks may include a first configurable parameter. The hardware or software characteristics of each of the plurality of neural networks may be determined by a number (or weight) corresponding to a configurable parameter included in each of the neural networks. The first configurable parameter may include at least one of an operational mode of each neural network, or a layer connection scheme. The operational mode may include the type of operation performed between layers included in the neural network, the number of times, and the like. The layer connection scheme may include the number of layers included in each operation network, the number of stacks or cells included in the layer, the connection relationship between layers, and the like.

The accelerator may refer, for example, to a hardware device capable of increasing the amount or processing speed of data to be processed by a neural network learned on the basis of an artificial intelligence (AI) algorithm. In one example, the accelerator may be implemented as a platform for implementing a neural network, such as, for example, and without limitation, a field-programmable gate-array (FPGA) accelerator or an application-specific integrated circuit (ASIC), or the like.

Each of the plurality of accelerators includes a second configurable parameter. The hardware or software characteristics of each of the plurality of accelerators may be determined according to a value corresponding to a second configurable parameter each including. The second configurable parameter included in each of the plurality of accelerators is at least one of a parallelization parameter (e.g., parallel output functions or parallel output pixels), buffer depth (e.g., buffer depth for input, output and weight buffers), pooling engine parameters, memory interface width parameters or a convolution engine ratio parameter.

The memory 110 may store an evaluation model 30. The evaluation model 30 may refer, for example, to an AI model that can output a reward value for the accelerator and neural network selected by the processor 120, and can be controlled by the processor 120. For example, the evaluation model 30 may perform normalization on information related to the implementation obtained by implementing the selected neural network on the selected accelerator (e.g., accuracy metrics and efficiency metrics).

The evaluation model 30 may perform a weighted sum operation on the normalized accuracy metrics and the efficiency metrics to output a reward value. The process of normalizing each metrics and performing a weighted sum operation by the evaluation model 30 will be described in greater detail below. The larger the reward value for the pair of accelerators and neural networks output by the evaluation model 30, the more accurate and efficient implementation and operation of the pair of accelerators and neural networks may be performed.

The evaluation model 30 may limit the value at which the evaluation model 30 can output through a threshold corresponding to each of the accuracy metrics and the efficiency metrics. For example, the algorithm to be applied for the accuracy metrics and efficiency metrics by the evaluation model 30 to output the reward value may be implemented as in Equation 2.

【Equation 2】

$$\mathcal{R} : \{\mathbf{m} \mid \mathbf{m} \in \mathbb{R}^{n} \land \forall_{i}[m_{i} \leq th_{i}]\} \rightarrow \mathbb{R}$$

$$\mathcal{R}(\mathbf{m}) = \mathbf{w} \cdot \mathbf{m}$$

In Equation 2, m may refer to the accuracy metrics or efficiency metrics, w may refer to a weight vector of m, and th may refer to a threshold value vector of m. The evaluation model 30 may output the reward value using Equation 3 below.

【Equation 3】

$$R(ar, lat, acc) = w_1 \aleph(-ar) + w_2 \aleph(-lat) + w_3 \aleph(acc)$$

$$\max_{s \in S} R(-ar, -lat, acc)$$

In Equation 3, ar is the area of the accelerator, lat (e.g., latency) is a waiting time, acc is an accuracy value, and w1, w2 and w3 are weight sets for each area, latency, and accuracy. If optimization is performed on the search space s, the evaluation model output E(s) = m satisfies a given constraint (e.g., a wait time of less than a particular value).

The accuracy metrics may refer, for example, to a value that indicates with which accuracy the neural network has been implemented on the accelerator. The efficiency metrics may refer, for example, to a value that indicates at which degree the neural networks can perform an optimized implementation on the accelerator. The efficiency metrics may include, for example, and without limitation, at least one of a latency metrics, a power metrics, an area metrics of the accelerator when a neural network is implemented on the accelerator, or the like.

The memory 110 may include a first predictive model 40 and a second predictive model 50. The first predictive model 40 may refer, for example, to an AI model capable of outputting an estimated value of hardware performance corresponding to the input accelerator and the neural network. The hardware performance corresponding to the first accelerator and the first neural network may include the latency or power required when the first neural network is implemented on the first accelerator.

The first predictive model 40 may output an estimated value of the latency or power that may be required when the first neural network is implemented on the first accelerator. The first hardware criteria may be a predetermined value at the time of design of the first predictive model 40, but may be updated by the processor 120. The embodiment associated with the first predictive model 40 will be described in greater detail below.

The second predictive model 50 may refer, for example, to an AI model capable of outputting an estimated value of hardware performance corresponding to the neural network. For example, when the first neural network is input, the second predictive model 50 may output an estimated value of the hardware performance corresponding to the first neural network. The estimated value of the hardware performance corresponding to the first neural network may include, for example, and without limitation, at least one of a latency predicted to be required when the first neural network is implemented at a particular accelerator, a memory footprint of the first neural network, or the like. The memory foot print of the first neural network may refer, for example, to the size of the space occupied by the first neural network on the memory 110 or the first accelerator. An example embodiment associated with the second predictive model 50 is described in greater detail below.

The first predictive model 40 and the second predictive model 50 may be controlled by the processor 120. Each model may be learned by the processor 120. For example, the processor 120 may input the first accelerator and the first neural network to the first predictive model to obtain an estimated value of the hardware performance of the first accelerator and the first neural network. The processor 120 may train the first predictive model 40 to output an optimal estimation value that may minimize and/or reduce the difference between the hardware performance value that can be obtained when the first neural network is implemented on the first accelerator and the obtained estimation value.

For example, the processor 120 may input the first neural network to the second predictive model 50 to obtain an estimated value of the hardware performance of the first neural network. The processor 120 can train the second predictive model 50 to output an optimal estimation value that can minimize and/or reduce the difference between the hardware performance value that can be obtained through the first neural network when the actual first neural network is implemented in a particular accelerator and the obtained estimation value.

The memory 110 may include a policy function model 60. The policy function model 60 may refer, for example, to an AI model that can output a probability value corresponding to a configurable parameter included in each of a neural network and an accelerator, and can be controlled by processor 120. In an example embodiment, when a plurality of neural networks are input, the policy function model 60 may apply a policy function to a first configurable parameter included in each neural network to output a probability value corresponding to each of the first configurable parameters. The policy function may refer, for example, to a function that can give a high probability value for a parameter that enables outputting a high reward value of the configurable parameters and can include a plurality of parameters. The plurality of parameters included in the policy function may be updated by the control of the processor 120.

The probability value corresponding to the first configurable parameter may refer, for example, to a probability value of whether the neural network including the first configurable parameter is a neural network capable of outputting a higher reward value than the other neural network. For example, a first configurable parameter may be an operation method, a first neural network may perform a first operation method, and a second neural network may perform a second operation method. When the first neural network and the second neural network are input, the policy function model 60 can apply a policy function to an operation method included in each neural network to output a probability value corresponding to each operation method. If the probability corresponding to the first operation method is 40% and the probability corresponding to the second operation method is 60%, the processor 120 may select a case where the probability of selecting the first neural network including the first operation method among the plurality of neural networks is 40%, and the probability of selecting the second neural network including the second operation method is 60%.

The policy function may be applied to the possible parameters to output a probability value corresponding to each of the second configurable parameters. The probability value corresponding to the second configurable parameter may refer, for example, to a probability value for which accelerator may output a higher reward value than the other accelerator, including the second configurable parameter. For example, if the second configurable parameter included in the accelerator is a convolution engine rate parameter, the first accelerator includes a convolution engine rate parameter, and the second neural network includes a convolution engine rate parameter, when the first accelerator and the second accelerator are input, the policy function model 60 may apply a policy function to the accelerator including each of the first and second convolution engine rate parameters to output a probability value corresponding to each convolution engine rate parameter. If the probability of selecting the first convolution engine rate parameter is 40% and the probability of selecting the second convolution engine rate parameter is 60%, the processor 120 may select a case where the probability of selecting the first accelerator including the first convolution engine rate parameter of the plurality of accelerators is 40%, and the probability of selecting the second accelerator including the second convolution engine rate parameter is 60%.

The evaluation model 30, the first predictive model 40, the second predictive model 50, and the policy function model 60 may have been stored in a non-volatile memory and then may be loaded to a volatile memory under the control of the processor 120. The volatile memory may be included in the processor 120 as an element of the processor 120 as illustrated in FIG. 1, but this is merely an example, and the volatile memory may be implemented as an element separate from the processor 120.

The non-volatile memory may refer, for example, to a memory capable of maintaining stored information even if the power supply is interrupted. For example, the non-volatile memory may include, for example, and without limitation, at least one of a flash memory, a programmable read-only memory (PROM), a magnetoresistive random access memory (MRAM), a resistive random access memory (RRAM), or the like. The volatile memory may refer, for example, to a memory in which continuous power supply is required to maintain stored information. For example, the volatile memory may include, without limitation, at least one of dynamic random-access memory (DRAM), static random access memory (SRAM), or the like.

The processor 120 may be electrically connected to the memory 110 and control the overall operation of the electronic device 100. For example, the processor 120 may select one of the plurality of neural networks stored in the neural network sub-search space by executing at least one instruction stored in the memory 110. The processor 120 may access a neural network sub-search space stored in memory 110. The processor 120 may input a plurality of neural networks included in the neural network sub-search space into the policy metric function model 60 to obtain a probability value corresponding to a first configurable parameter included in each of the plurality of neural networks. For example, if the first configurable parameter has a connection scheme of a layer, the processor 120 may input a plurality of neural networks into the policy function model 60 to obtain a probability value corresponding to a layer connection scheme of each of the plurality of neural networks. If the probability values corresponding to the layer connection scheme of each of the first neural network and the second neural network are 60% and 40%, respectively, the processor 120 may select the first neural network and the second neural network of the plurality of neural networks with a probability of 60% and 40%, respectively.

The processor 120 may select an accelerator to implement a selected neural network of the plurality of accelerators. The processor 120 may access the sub-search space of the accelerator stored in the memory 110. The processor 120 inputs a plurality of accelerators stored in the accelerator sub-search space into the policy function model 60 to obtain a probability value corresponding to a second configurable parameter included in each of the plurality of accelerators. For example, if the second configurable parameter is a parallelization parameter, the processor 120 may enter a plurality of accelerators into the policy function model 60 to obtain a probability value corresponding to the parallelization parameter included in each of the plurality of accelerators. If the probability values corresponding to the parallelization parameters which each of the first accelerator and the second accelerator includes are 60% and 40%, respectively, the processor 120 may select the first accelerator and the second accelerator among the plurality of accelerators with the probabilities of 60% and 40%, respectively, as the accelerator to implement the first neural network.

In an example embodiment, when a first neural network among a plurality of neural networks is selected, the processor 120 may obtain an estimated value of the hardware performance corresponding to the first neural network via the second predictive model 50 before selecting the accelerator to implement the first neural network of the plurality of accelerators. If the estimated value of the hardware performance corresponding to the first neural network does not satisfy the second hardware criteria, the processor 120 may select one of the plurality of neural networks again except for the first neural network. The processor 120 may input the first neural network to the second predictive model 50 to obtain an estimated value of the hardware performance corresponding to the first neural network. The estimated value of the hardware performance corresponding to the first neural network may include at least one of a latency predicted to take place when the first neural network is implemented in a particular accelerator or the memory foot print of the first neural network.

The processor 120 may identify whether an estimated value of the hardware performance corresponding to the neural network satisfies the second hardware criteria. If the estimated value of the hardware performance corresponding to the first neural network is identified to satisfy the second hardware criteria, the processor 120 may select the accelerator to implement the first neural network among the plurality of accelerators. If it is identified that the estimated value of the hardware performance corresponding to the first neural network does not satisfy the second hardware criterion, the processor 120 can select one neural network among the plurality of neural networks except for the first neural network. If the performance of the hardware corresponding to the first neural network does not satisfy the second hardware criterion, it may mean that high reward value may not be obtained through the first neural network. If the hardware performance of the first neural network is identified to not satisfy the second hardware criteria, the processor 120 can minimize and/or reduce unnecessary operations by excluding the first neural network. However, this is only an example embodiment, and the processor 120 may select the first accelerator to implement the first neural network of the plurality of accelerators immediately after selecting the first neural network among the plurality of neural networks.

In another embodiment, if the first neural network among the plurality of neural networks is selected, and the first accelerator in which the first neural network of the plurality of accelerators is to be implemented is selected, the processor 120 may input the first accelerator and the first neural network to the first predictive model 40 to obtain an estimated value of the hardware performance corresponding to the first accelerator and the first neural network. The hardware performance corresponding to the first accelerator and the first neural network may include the latency or power required when the first neural network is implemented on the first accelerator.

The processor 120 may identify whether an estimated value of the obtained hardware performance satisfies the first hardware criteria. If the estimated value of the obtained hardware performance is identified to satisfy the first hardware criterion, the processor 120 may implement the first neural network on the first accelerator and obtain information related to the implementation. If it is identified that the obtained hardware performance does not satisfy the first hardware criteria, the processor 120 may select another accelerator to implement the first neural network of the plurality of accelerators except for the first accelerator. That the hardware performance of the first neural network and the first accelerator does not satisfy the first hardware criterion may refer, for example, to a high reward value not being obtained via information related to the implementation obtained by obtaining the first neural network on the first accelerator. Thus, if it is identified that the hardware performance of the first neural network and the first accelerator does not satisfy the first hardware criteria, the processor 120 can minimize and/or reduce unnecessary operations by immediately excluding the first neural network and the first accelerator. However, this is only an example embodiment, and if the first accelerator and the first neural network are selected, the processor 120 may directly implement the selected accelerator and neural network without inputting the selected accelerator and neural network to the first predictive model 40 to obtain information related to the implementation.

The first hardware criteria and the second hardware criteria may be predetermined values obtained through experimentation or statistics, but may be updated by the processor 120. For example, if the threshold latency of the first hardware criteria is set to 100 ms, but the average value of the estimated value of the latency corresponding to the plurality of neural networks is identified as 50 ms, the processor 120 can reduce (e.g., to 60 ms) the threshold latency. The processor 120 may update the first hardware criteria or the second hardware criteria based on an estimated value of the hardware performance of the plurality of neural networks or a plurality of accelerators.

The processor 120 may implement the neural network selected on the selected accelerator to obtain information related to the implementation including implementation and accuracy and efficiency metrics. The processor 120 inputs information related to the implementation to the evaluation model 30 to obtain a reward value corresponding to the selected accelerator and neural network. As described above, the evaluation model 30 may normalize the accuracy metrics and the efficiency metrics, and perform a weighted sum operation on the normalized index to output a reward value.

If the first reward value is obtained by implementing the first neural network on the first accelerator, the processor 120 selects a second neural network to be implemented on the first accelerator of the plurality of neural networks. The processor 120 may select a second neural network by searching for a neural network that may obtain a higher reward value than when implementing the first neural network on the first accelerator among the plurality of neural networks. The processor 120 may select a second neural network among the plurality of neural networks except for the first neural network in the same manner as the way to select the first neural network among the plurality of neural networks.

The processor 120 obtains information related to the implementation by implementing a second neural network selected on the first accelerator. Before implementing the second neural network on the first accelerator, the processor 120 may input the first accelerator and the second neural network into the first prediction model 30 to identify whether the hardware performance corresponding to the first accelerator and the second neural network satisfies the first hardware criteria. If the hardware performance corresponding to the first accelerator and the second neural network is identified to satisfy the first hardware criteria, the processor 120 may implement the second neural network on the first accelerator to obtain information related to the implementation. However, this is only an example embodiment, and the processor 120 can obtain information related to the implementation directly without inputting the first accelerator and the second neural network to the first predictive model 30.

The processor 120 may implement the first accelerator and the second neural network to obtain the second reward value based on the obtained accuracy metrics and an efficiency metrics. The processor 120 may select a neural network and an accelerator having the largest reward value among the plurality of accelerators based on the first reward value and the second reward value. The second reward value being greater than the first reward value may refer, for example, to the implementing the first neural network on the first accelerator being more efficient and accurate than implementing the second neural network. The processor 120 may identify that the first accelerator and the second neural network pair are more optimized and/or improved pairs than the first accelerator and the first neural network pair.

The processor 120 selects an accelerator to implement a second neural network among the plurality of accelerators except for the first accelerator. When the second accelerator is selected as the accelerator for implementing the second neural network, the processor 120 implements the second neural network on the second accelerator to obtain information related to the implementation and obtain a third reward value based on the information associated with the obtained implementation. The processor 120 may compare the second reward value with the third reward value to select a pair of accelerator and neural networks that can output a higher reward value. The processor 120 selects a pair of neural networks and accelerators that can output the largest reward value among the stored accelerator and neural networks by repeating the above operation. A pair of neural networks and accelerators that can output the largest reward value can perform specific tasks, such as, for example, and without limitation, image classification, voice recognition, or the like, accurately and efficiently than other pairs.

The processor 120 may include various processing circuitry, such as, for example, and without limitation, one or more among a central processing unit (CPU), a dedicated processor, a micro controller unit (MCU), a micro processing unit (MPU), a controller, an application processor (AP), a communication processor (CP), an Advanced Reduced instruction set computing (RISC) Machine (ARM) processor for processing a digital signal, or the like, or may be defined as a corresponding term. The processor 120 may be implemented, for example, and without limitation, in a system on chip (SoC) type or a large scale integration (LSI) type which a processing algorithm is implemented therein or in a field programmable gate array (FPGA). The processor 120 may perform various functions by executing computer executable instructions stored in the memory 110. The processor 120 may include at least one of a graphics-processing unit (GPU), neural processing unit (NPU), visual processing unit (VPU) that may include AI-only processors, for performing an AI function.

The function related to AI operates through the processor and memory. One or a plurality of processor may include, for example, and without limitation, a general-purpose processor such as a central processor (CPU), an application processor (AP), a digital signal processor (DSP), a dedicated processor, or the like, a graphics-only processor such as a graphics processor (GPU), a vision processing unit (VPU), an AI-only processor such as a neural network processor (NPU), or the like, but the processor is not limited thereto. The one or a plurality of processors may control processing of the input data according to a predefined operating rule or AI model stored in the memory. If one or a plurality of processors are an AI-only processor, the AI-only processor may be designed with a hardware structure specialized for the processing of a particular AI model.

Predetermined operating rule or AI model may be made through learning. For example, being made through learning may refer, for example, to a predetermined operating rule or AI model set to perform a desired feature (or purpose) is made by making a basic AI model trained using various training data using learning algorithm. The learning may be accomplished through a separate server and/or system, but is not limited thereto and may be implemented in an electronic apparatus. Examples of learning algorithms include, but are not limited to, supervised learning, unsupervised learning, semi-supervised learning, or reinforcement learning.

The AI model may be comprised of a plurality of neural network layers. Each of the plurality of neural network layers may include a plurality of weight values, and may perform a neural network operation through an operation between result of a previous layer and a plurality of parameters. The parameters included in the plurality of neural network layers may be optimized and/or improved by learning results of the AI model. For example, the plurality of weight values may be updated such that a loss value or a cost value obtained by the AI model may be reduced or minimized during the learning process.

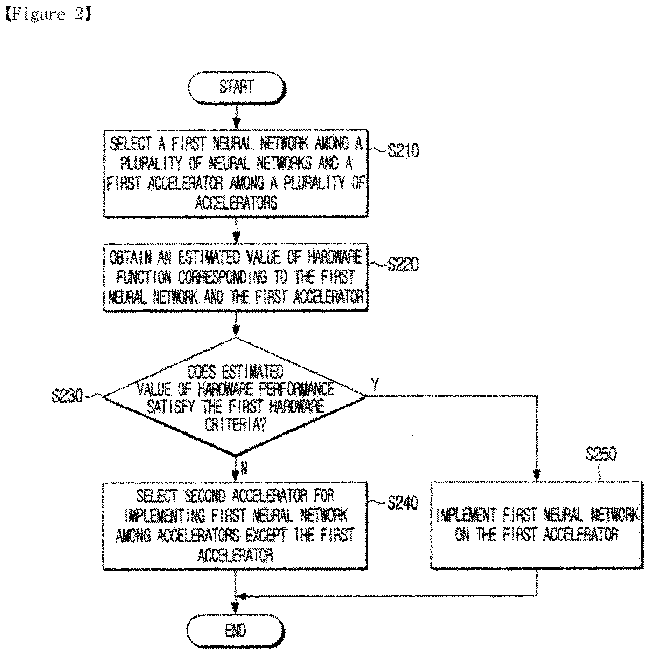

Fig. 2 is a flowchart illustrating an example process for determining whether to implement a first neural network on a first accelerator through a first prediction model by the electronic device 100 according to an embodiment.

The electronic device 100 may select a first neural network among the plurality of neural networks and select the first accelerator for implementing the first neural network among a plurality of accelerators in step S210. The process of selecting by the first neural network and the first accelerator by the electronic device 100 has been described, by way of non-limiting example, with reference to FIG. 1 above and will not be further described here.

The electronic device 100 may obtain an estimated value of the hardware performance corresponding to the first neural network and the first accelerator through the first predictive model in step S220. When the first neural network and the first predictive model are input, the first predictive model may output an estimate value of the hardware performance corresponding to the first neural network and the first accelerator. For example, the first predictive model may output a latency and power that is estimated to be required when implementing the first neural network on the first accelerator.

The electronic device 100 may identify whether the estimated value of the obtained hardware performance satisfies the first hardware criteria in step S230. For example, if the latency estimated to be required when implementing the first neural network on the first accelerator exceeds the first hardware criteria, the electronic device 100 may identify that an estimated value of the hardware performance corresponding to the first neural network and the first accelerator does not satisfy the first hardware criteria. As another example, if the power estimated to be consumed in implementing the first neural network on the first accelerator does not exceed the first hardware criteria, the electronic device 100 may identify that an estimated value of the hardware performance corresponding to the first neural network and the first accelerator satisfies the first hardware criteria.

If the estimated value of the hardware performance corresponding to the first neural network and the first accelerator does not satisfy the first hardware criteria ( "No" in S230), the electronic device 100 can select a second accelerator to implement the first neural network among the accelerators except the first accelerator in step S240. That an estimated value of the hardware performance corresponding to the first neural network and the first accelerator does not satisfy the first hardware criteria may mean that a high reward value may not be obtained via the first neural network and the first accelerator. The electronic device 100 can minimize and/or reduce unnecessary operations by selecting a pair of neural networks and accelerators except for the first neural network and the first accelerator pair.

If the estimated value of the hardware performance corresponding to the first neural network and the first accelerator satisfies the first hardware criteria ( "Yes" in S230), the electronic device 100 can implement the first neural network on the first accelerator in step S250. Since the estimated value of the hardware performance corresponding to the first neural network and the first accelerator satisfies the first hardware reference, the electronic device 100 may obtain information related to the implementation by implementing the first neural network on an actual first accelerator.

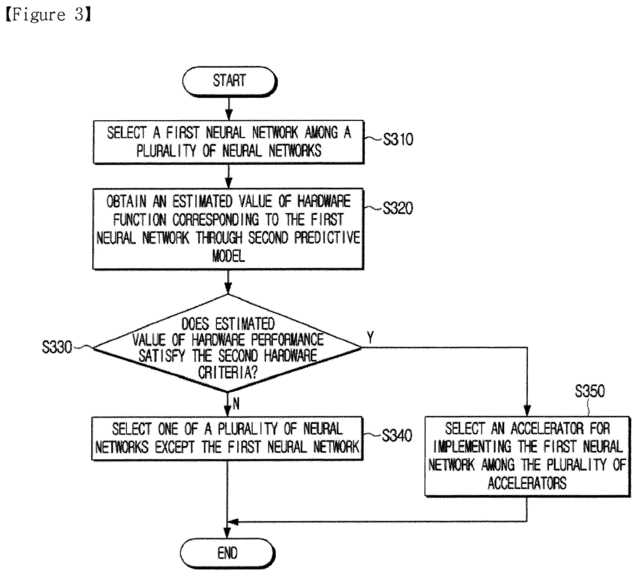

Fig. 3 is a flowchart illustrating an example process for determining whether to select an accelerator for implementing the first neural network through a second prediction model by the electronic device 100.

The electronic device 100 may select the first neural network among a plurality of neural networks in step S310. The process of selecting the first neural network by the electronic device 100 among the plurality of neural networks has been described above and thus, a duplicate description may not be repeated here.

The electronic device 100 can obtain an estimated value of the hardware performance corresponding to the first neural network through the second predictive model in step S320. When the first neural network is input, the second predictive model can output an estimated value of the hardware performance corresponding to the first neural network. For example, the second predictive model may estimate the latency or memory foot print of the first neural network estimated to be required when the first neural network is implemented on a particular accelerator.

The electronic device 100 can identify whether an estimated value of hardware performance corresponding to the obtained first neural network satisfies a second hardware reference in step S330. For example, if the latency estimated to be required when implementing the first neural network on a particular accelerator exceeds the second hardware reference, the electronic device 100 may identify that an estimated value of the hardware performance corresponding to the first neural network does not satisfy the second hardware criteria. As another example, if the capacity of the first neural network satisfies the second hardware criteria, the electronic device 100 may identify that an estimated value of the hardware performance corresponding to the first neural network satisfies the second hardware criteria.

If it is identified that the estimated value of the hardware performance corresponding to the first neural network does not satisfy the second hardware reference ( "No" in S330), the electronic device 100 may select one of the plurality of neural networks except for the first neural network in step S340. That the estimated value of the hardware performance corresponding to the first neural network does not satisfy the second hardware criteria may mean that it does not obtain a high reward value via the first neural network. Thus, the electronic device 100 can minimize and/or reduce unnecessary operations by selecting another neural network of the plurality of neural networks except for the first neural network.

If it is identified that the estimated value of the hardware performance corresponding to the first neural network and the first accelerator satisfies the second hardware criteria ( "Yes" in S330), the electronic device 100 can select the accelerator to implement the first neural network among the plurality of accelerators in step S350. The process of selecting by the electronic device 100 the accelerator to implement the first neural network has been described with reference to FIG.

1, and thus a detailed description thereof will not be repeated here.

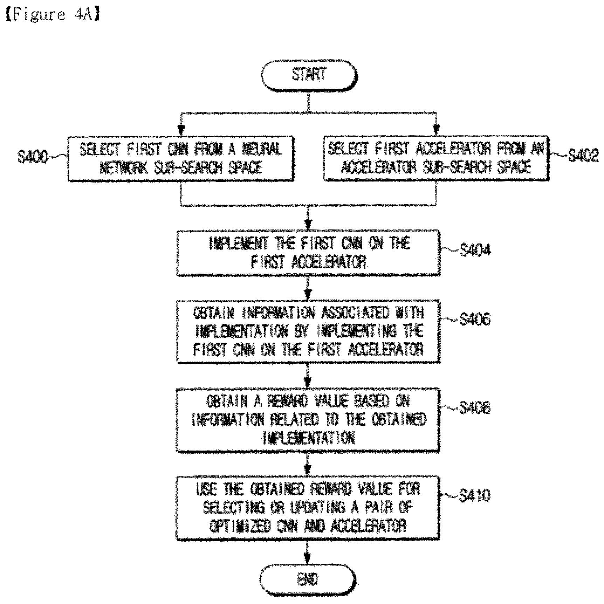

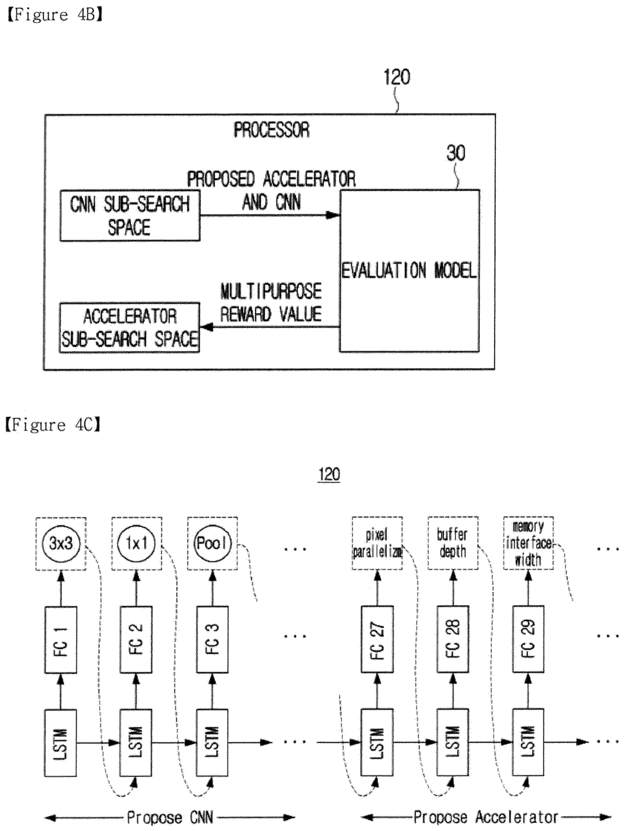

Figs. 4A, 4B and 4C are a flowchart illustrating an example method for designing the accelerator and the parameterizable algorithm by the electronic device 100. FIGS. 4A and 4B illustrate an example that the parameterizable algorithm is implemented as a convolution neural network (CNN), but this is merely an example. For example, the parameterizable algorithm may be implemented as another type of neural network.

As shown in Figure 4A, electronic device 100 selects a first convolution neural network (CNN) architecture from a CNN search space stored in memory 110 (S400). At the same time or within the threshold time range, the electronic device 100 may select the first accelerator architecture from the accelerator sub-search space in step S402. The electronic device 100 can implement the first CNN selected on the selected first accelerator architecture in step S404. The electronic device 100 can obtain information related to or associated with the implementation including the accuracy metrics and the efficiency metrics by implementing the first CNN on the selected first accelerator in step S406. The efficiency metrics may include, for example, and without limitation, the wait time, power, area of the accelerator, or the like, required for the neural network to be implemented on the accelerator. The electronic device 100 can obtain the reward value based on the information related to the obtained implementation in step S408. The electronic device 100 may then use the obtained reward value to select or update a pair of optimized CNNs and accelerators (e.g., FPGA) in step S410. The electronic device 100 may repeat the processor described above until the optimal CNN and FPGA pair are selected.

Figure 4B is a block diagram illustrating an example system for implementing the method of Figure 4A. The processor 120 of the electronic device 100 may select the first CNN and the first FPGA from CNN sub-search space and FPGA sub-search space (or, FPGA design space) and input information related to implementation by implanting the first CNN on the first FPGA to the evaluation model 30. The evaluation model 30 may output the obtained reward based on the information related to the implementation.

The method may be described as a reinforcement learning system to jointly optimize and/or improve the structure of a CNN with the underlying FPGA accelerator. As described above, the related art NAS may adjust the CNN to a specific FPGA accelerator or adjust the FPGA accelerator for the newly discovered CNN. However, the NAS according to the disclosure may design both the CNN and the FPGA accelerator corresponding thereto commonly.

Figure 4C is a diagram illustrarting an example arrangement of the processor 120. As shown in Figure 4C, the processor 120 comprises a plurality of single long short-term memory (LSTM) cells followed by a corresponding specialized fully-connected (FC) layer; with one cell and one FC layer per output. The result output from the FC layer connected to one single LSTM cell can be input to the next LSTM cell. At this time, the result output from the FC layer may be a parameter for configuring the CNN or accelerator hardware. In an example embodiment, as shown in FIG. 4C, the processor 120 may first obtain a parameter that configures the CNN via a plurality of single LSTM cells and an FC layer coupled thereto, and then may obtain the hardware parameters of the FPGA accelerator. The first and second configurable parameters of each of the CNN and the FPGA accelerator are processed as outputs and have their own cell and FC layers. Once all of the configurable parameters have been obtained, the processor 120 may transmit the CNN and the accelerator to the evaluation model 30 for evaluation of the CNN and the accelerator.

The processor 120 shown in Figure 4C is an extension of a traditional RL-based NAS and may be referred to as an RL agent. The processor is therefore based on an LSTM cell. However, the processor 120 may implement a completely different algorithm, for example a genetic algorithm and may thus have a different structure. The processor 120 is responsible for taking a finite sequence of actions which translate to a model's structure. Each action may be called a decision like the examples illustrated in Figure 4C. Each decision is selected from a finite set of options and together with other decisions selected by the processor 120 in the same iteration form a model structure sequence s. The set of all possible s a search space, may be be formally defined as:

$$S = O_1 \times O_2 \times ... O_n \ (1)$$

Where Oi is the set of available options for the i-th decision. In each iteration t, the processor 120 generates a structure sequence st.

The sequence st is passed to the evaluation model which evaluates the proposed structure and creates a reward rt generated by the reward function R(st) based on evaluated metrics. The reward is then used to update the processor such that (as $t \rightarrow \infty$) it selects sequences st which maximize the reward function.

Different approaches to the problem of updating the processor exist. For example, in deep RL, a DNN may be used as a trainable component and it is updated using backpropagation. For examle, in REINFORCE, which is used in the method outlined above in Figure 4A, the processor 120 DNN (a single LSTM cell as described above) implements a policy function $\pi$ which produces a sequence of probability distributions, one per decision, which are sampled in order to select elements from their respective 0 sets and therefore decide about a sequence s. The network is then updated by calculating the gradient of the product of the observed reward r and the overall

probability of selecting the sequence s. This will be described with reference to Equation 4 below.

[Equation 4]

$$\nabla(-r\log p(s|D)) \quad (2)$$

Where D={D1, D2, $\cdots$ , Dn} is the set of probability distributions for each decision. Since s is 0 generated from a sequence of independently sampled decisions s1, s2, $\cdots$ , sn, the overall probability p(s|D) can be easily calculated as:

$$p(s|D) = \prod_{i=1}^{n} p(s_i|D_i) \quad (3)$$

RL-based algorithms are convenient because they do not impose any restrictions on what s elements are (what the available options are) or how the reward signal is calculated from s. Therefore, without the loss of generality, we can abstract away some of the details and, in practice, identify each available option simply by its index. The sequence of indices selected by the processor 120 is then transformed into a model and later evaluated to construct the reward signal independently from the algorithm described in this section. Different strategies can be used without undermining the base methodology. Following this property, a search space may be described using a shortened notation through Equation 5:
[Equation 5]

$$S = (k_1, k_2, \dots, k_n) \; k_i \in N_+ \quad (4)$$

Where it should be understood as a search space S as defined in Equation 1 with |0i| = ki, where k are the number of options available for each parameter.

An overview of the generic algorithm is illustrated by way of non-limiting example in the Algorithm below:

---

**Algorithm 1: A generic search algorithm using REINFORCE.**

---

**Input:** Policy weights $\theta$, number of steps to run $T$, number of decisions to make $n$

**Output:** Updated $\theta$ and the set of explored points $\mathbb{V}$

1 $\mathbb{V} \leftarrow \varnothing$

2 **for** $t \leftarrow 0$ **to** $T$ **do**

3     $D_t \leftarrow \pi(\theta)$

4     $s_t \leftarrow \underbrace{(0, 0, \cdots, 0)}_{n \text{ times}}$

5     **for** $i \leftarrow 0$ **to** $n$ **do**

6        $s_{t,i} \sim D_{t,i}$

7     **end**

8     $m_t \leftarrow \mathcal{E}(s_t)$

9     $r_r \leftarrow \mathcal{R}(m_t)$

10     $\mathbb{V} \leftarrow \mathbb{V} \cup \{(s_t, r_t, m_t)\}$

11     $\theta \leftarrow$ update $\theta$ using $\nabla(-r_t \log p(s_t | D_t))$

12 **end**

---

The REINFORCE algorithm or a similar algorithm may be used to conduct the search in conjunction with evaluating the metrics and generating the reward function. The algorithm may comprise a policy function that takes in weights/parameters and distributions Dt may be obtained from the policy function. A sequence st from the distributions may then be sampled. When searching the combined space, a sequence contains both FPGA parameters and CNN parameters. The sequence is then evaluated by an evaluation model 30 running the selected CNN on the selected FPGA, or simulating performance as described in more detail below). Metrics mt are measured by the evaluation model 30 such as latency, accuracy, area, power. These metrics are used as input to a reward function R(mt). The reward function, together with the probability of selecting that sequence, are used to update the parameters/weights of the policy function. This makes the policy function learn to choose a sequence that maximizes reward.

The method shown in Figure 4A extends traditional NAS by including a number of decisions related to the design choices of an FPGA accelerator. The search space is thus defined as a Cartesian product of a neural network sub-search space (SNN) with an FPGA sub-search space (SFPGA) and defined as Equation 1. Where SNN is the search space and SFPGA is the extending part related to the FPGA accelerator design.

The search space described above is not fundamentally different from the definition provided in Equation 5 and does not imply any changes to the search algorithm. However, since the search domain for the two parts is different, it may be helpful to explicitly distinguish between them and use that differentiation to illustrate their synergy. Each sub-search space is discussed in greater detail below.

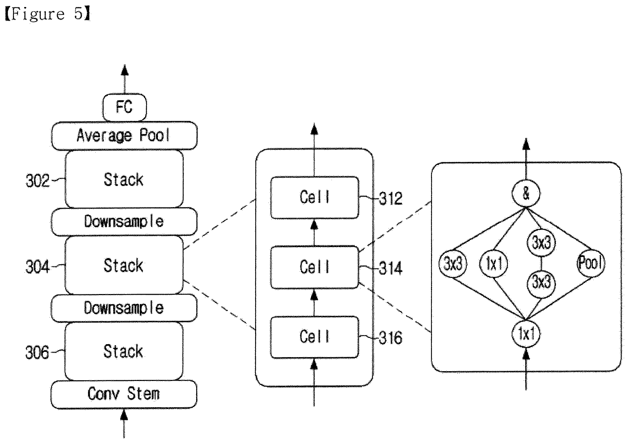

Figure 5 is a diagram illustrating an example of a well-defined CNN search space which can be used in the method of Figure 4A according to an embodiment. It will be appreciated that this is just one example of a well-defined search space which may be used. The search space is described in detail in "NAS Bench 101: Towards Reproducible Neural Architecture Search" by Ying et al published in arXiv e-prints (Feb 2019), which is incorporated by reference herein in its entirety, and may be termed NASBench. Figure 5 illustrates an example structure of the CNNs within the search space. As shown, the CNN comprises three stacks 302, 304, 306 each of which comprises three cells 312, 314, 316. Each stack uses the same cell design but operates on data with different dimensionality due to downsampling modules which are interleaved with the stacks. For examle, each stack's input data is x2 smaller in both X and Y dimensions but contains x2 more features compared to the previous one, which is a standard practice for classification models. This skeleton is fixed with the only varying part of each model being the inner-most design of a single cell.

The search space for the cell design may be limited to a maximum of 7 operations (with the first and last fixed) and 9 connections. The operations are selected from the following available options: 3x3 or 1x1 convolutions, and 3x3 maximum pooling, all with stride 1, and connections are required to be "forward" (e.g., an adjacency matrix of the underlying computational graph needs to be upper-triangular). Additionally, concatenation and elementwise addition operations are inserted automatically when more than one connection is incoming to an operation. As in equation (1), the search space is defined as a list of options (e.g., configurable parameters), in this case, the CNN search space contains 5 operations with 3 options each, and 21 connections that can be either true or false (2 options) -- the 21 connections are the non-zero values of the adjacency matrix between the 7 operations.

$$SCNN = (3, 3, \cdots 3, 2, 2, \cdots 2) \ (6)$$

5 times 21 times

The search space does not directly capture the requirement of having at most 9 connections and therefore contains invalid points, e.g., points in the search space for which it may be impossible to create a valid model. Additionally, a point can be invalid if the output node of a cell is disconnected from the input.

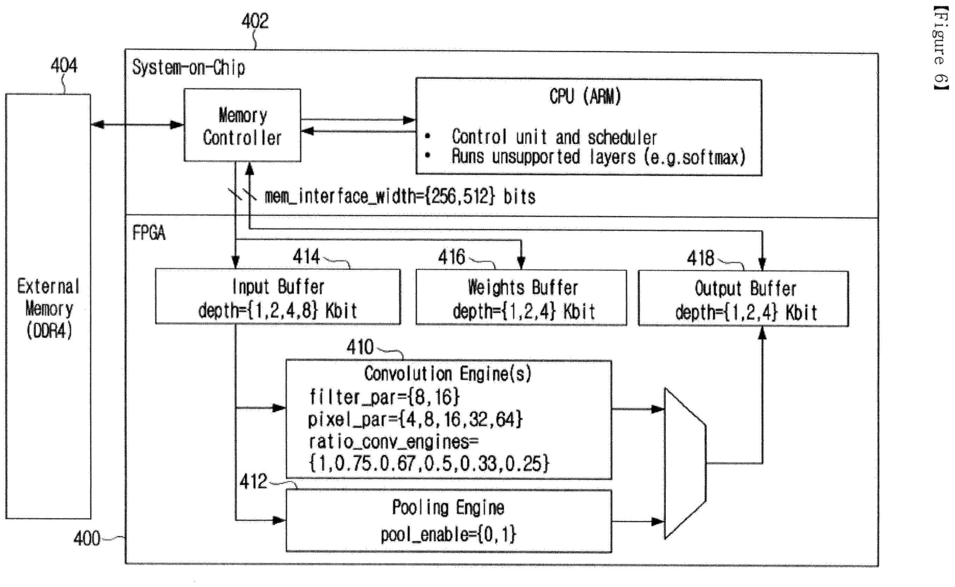

Figure 6 is is a diagram illustrating an example FPGA accelerator 400 together with its connected system-on-chip 402 and external memory 404. The FPGA accelerator 400 comprises one or more convolution engines 410, a pooling engine 412, an input buffer 414, a weights buffer 416 and an output buffer 418. A library for acceleration of DNNs on System-on-chip FPGAs such as the one shown in Figure 4 is described in "Chaidnn v2 - HLS based Deep Neural Network Accelerator Libray for Xilinx Ultrascale+ MPSoCs" by Xilinx Inc 2019, which is incorporated by reference herein in its entirety, and is referred to as ChaiDNN library below.

The search space for the FPGA accelerator is defined by the configurable parameters for each of the key components of the FPGA accelerator. As described in greater detail below, the configurable parameters which define the search space include parallelization parameters (e.g. parallel output features or parallel output pixels), buffer depths (e.g. for the input, output and weights buffers), memory interface width, pooling engine usage and convolution engine ratio.

The configurable parameters of the convolution engine(s) include the parallelization parameters "filter_par" and "pixel_par" which determine the number of output feature maps and the number of output pixels to be generated in parallel, respectively. The parameter convolution engine ratio "ratio_conv_engines" is also configurable and is newly introduced in this method. The ratio may determine the number of DSPs assigned to each convolution engine. When set to 1, this may refer, for example, to there being a single general convolution engine which runs any type of convolution and the value of 1 may be considered to be the default setting used in the ChaiDNN library. When set to any number below 1, there are dual convolution engines - for example one of them specialized and tuned for 3x3 filters, and the other for 1x1 filters.

The configurable parameter for pooling engine usage is "pool_enable" . If this parameter is true, extra FPGA resource is used to create a standalone pooling engine. Otherwise the pooling functionality in the convolution engines is used.

In the implementation shown in Figure 6, here are three buffers: an input buffer 414, a weights buffer 416 and an output buffer 418. Each of the buffers has a configurable depth and resides in the internal block memory of the FPGA. In the current CHaiDNN implementation, the buffers need to have enough space to accommodate the input feature maps, output feature maps and weights of each layer. Bigger buffer size 5 allows for bigger images and filters without fetching data from slower external memory. As described below, feature and filter slicing may improve the flexibility of the accelerator.

The FPGA communicates with the CPU and external DDR4 memory 404 via an AXI bus. As in the CHaiDNN library, a configurable parameter allows for configuring the memory interface width to achieve trade-off between resource and performance.

The following defines the FPGA accelerator search space for the parameters (filter_par, pixel_par, input, output, weights buffer depths, mem_interface_width, pool_en and ratio_conv_engines).

$$S\_{FPGA} = (2,\ 5,\ 4,\ 3,\ 3,\ 2,\ 2,\ 6)\ (7)$$

Considering the detail of the evaluation model in greater detail, it is noted that the area and latency of the accelerator are determined by parameters in the accelerator design space. Compiling all configurations in the design space to measure area and latency online during NAS is thus unlikely to be practical, since each compile takes hours and running CNN model simultaneously requires thousands of FPGAs. Accordingly, a fast evaluation model may be useful to find efficiency metrics.

For each accelerator architecture, step S406 of Figure 4A may be completed in stages: first using an area model. The FPGA resource utilization in terms of CLBs, DSPs and BRAMs may be estimated using equations to model the CLB, DSP and BRAM usage for each subcomponent. An example subcomponent is a line buffer within the convolution engine that varies based on the size of the configurable parameters "filter_par" and "pixel_par" . An equation uses these two variables as input and gives the number of BRAMs.

When the configurable parameter "ratio_conv_engines" is set to less than 1, there may be two specialized convolution engines. In this case, the CLBs and DSPs usage of the convolution engines is decreased by 25% compared to the general convolution engine. This is a reasonable estimate of potential area savings that can arise due to specialization, and much larger savings have been demonstrated in the literature. In addition, when standalone pooling engine is used and the configurable parameter "pool_enable" is set to 1, a fixed amount of CLBs and DSPs are consumed.

BRAMs buffer data for the convolution and pooling engines. The size of input, output and weight buffers are configurable via the depth. This data is double buffered and thus consumes twice the amount of BRAMs. Fixed number of BRAMs are also dedicated to pooling (if enabled), bias, scale, mean, variance and beta. The number of BRAMs are calculated assuming that each BRAM is 36 Kbits. Based on the FPGA resource utilization, the next step is then to estimate the FPGA sizes in mm2 such that the area is quantified to a single number - silicon area. The area of each resource is scaled relative to CLB. Since this data is not available for the device that being used, data for similar devices is used from "Design Tradeoffs for Hard and Soft FPGA-based Network on Chips" by Abdelfattah et al publication in International Conference on Field Programmable Technology 95-103 (2012), which is incorporated by reference herein in its entirety. Account for the smaller process node (20nm vs. 40nm) and the different block properties (8 LUTs per CLB instead of 10, and 36 Kbit per BRAM instead of 9 Kbit) is also taken. The table below shows the estimated block area of a device which may be used in the method.

| Resource | Relative area (CLB) | Tile Area (mm2) |
|---|---|---|
| CLB | 1 | 0.0044 |
| BRAM - 36 Kbit | 6 | 0.026 |
| DSP | 10 | 0.044 |
| Total | 64,922 | 286 |

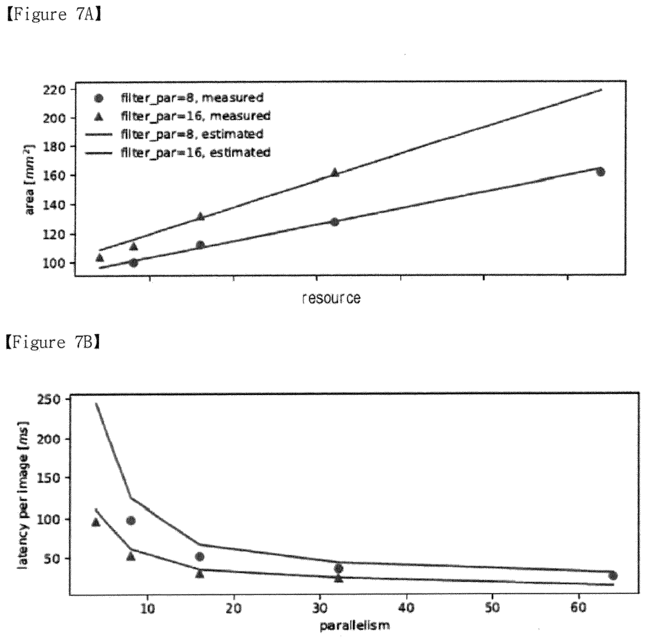

Figure 7A is a graph illustrating the area of various example accelerator architectures. The lines plot the estimated resource usage by area for configurable parameters "filter_par" =8 and "filter_par" =16. Measurements of the area have also been calculated and are shown on the graph. The figure shows that the predictions of the area model is valid in respect to the real measurements. It is noted that the model has predicted the area of accelerator architecture currently not supported by CHaiDNN yet, for example the smallest architecture with configurable parameters "filter_par" =8, "pixel_par" =4 is sized at 96.43 mm2 and the largest

architecture with configurable parameters "filter_par" =16, "pixel_par" =64 is sized at 218.62 20 mm2.

Once the FPGA resource utilization in terms of CLBs, DSPs and BRAMs has been estimated. The latency may be estimated as part of step S406 of Figure 4A, e.g. using a latency model. It will be appreciated that in this example utilization is estimated before latency but the estimates may be undertaken in any order.

The latency model may, for example, include two parts - 1) latency lookup table of operations and 2) scheduler. From the NASBench search space, 85 operations are obtained including 3x3 and 1x1 convolutions, max pooling and element-wise addition operations of various dimensions. Running each operation on the FPGA accelerator with different configurations and using the performance evaluation API provided by CHaiDNN profiles the latency numbers which are then stored in a lookup table. The scheduler assigns operations to parallel compute units greedily and calculates the total latency of the CNN model using the latency of operations in the lookup table.

The latency of convolution operation depends on the parallelism factors "filter_par" and "pixel_par" . Since CHaiDNN does not support architectures "filter_par=8" , "pixel_par=4" and "filter_par=16" , "pixel_par=64" , their latency is interpolated using the measurements from the other architectures. In the case with dual convolution engines, one of them is specialized for 3x3 filters and the other for 1x1 filters. The performance of corresponding convolution is scaled in proportion to the number of engines available. For example, when the parameter ratio_conv_engines = 0.75, the latency of 3x3 convolution increases by 1/0.75 and the latency of 1x1 convolution increases by 1/0.25.

In the original CHaiDNN accelerator, the data buffers must be sized to fit the entire input, output and filter tensors to achieve the highest possible throughput. However, if the image resolution increases and the CNN becomes deeper, such an allocation scheme is infeasible and restricts the feasibility of the accelerator. In the method described in Figure 7A, a scheme where slices of the input tensor are fetched from external memory into the input buffer and processed independently by accelerator may be added. Furthermore, output layers and filter weights are spilled to external memory when the output and weight buffers are full, hence the performance is bounded by the memory bandwidth which depends on the configurable parameter "mem_interface_width" .

Some assumptions have thus been made when building the latency model due to the limitations on the current implementation of CHaiDNN. Firstly, the performance evaluation API does not support max pooling running on a standalone engine, thus the latency is modelled to be 2x faster than those running on the convolution engine. Secondly, the memory interface width cannot be configured independently. It is related to the DIET_CHAI_Z configuration which includes a set of parameters, and the memory interface width depends on the AXI bus which has reduced width when DIET_CHAI_Z is enabled. Without bringing all the parameters to the accelerator design space, the model assumes that the latency increases by 4% when the parameter "mem_interface_width" reduces from 512 bits to 256 bits. Lastly, the approach used in the model does not consider operation fusing which is used by the runtime of the accelerator to optimize latency.

Figure 7B is a graph illustrating the results of the validation of the latency model. First, the latency is estimated by the model for different accelerator architectures and the results are shown as lines in Figure 7B. Then we run the model on the FPGA accelerator and measure the end-to-end latency as plotted in Figure 7B. The figure shows that the latency model is able to describe the trend of latency in respect to the level of parallelism despite the assumptions which may been made. It is noted that for Figures 7A and 7B, pooling of HW is enabled, the memory interface width is 512 bits, the buffer sizes are [8192,2048,2048], the batch size is 2 and the clock frequency is 200MHz.

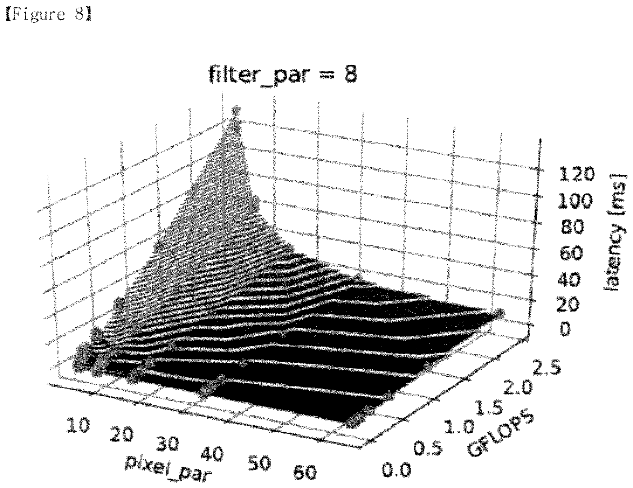

Figure 8 is a graph illustrating the extracted latency numbers of all the convolution operations from the lookup table relative to the parameters GFLOPS (size) and pixel_par. As shown, the latency increases with data size and decreases with more parallelism in the convolution engines.

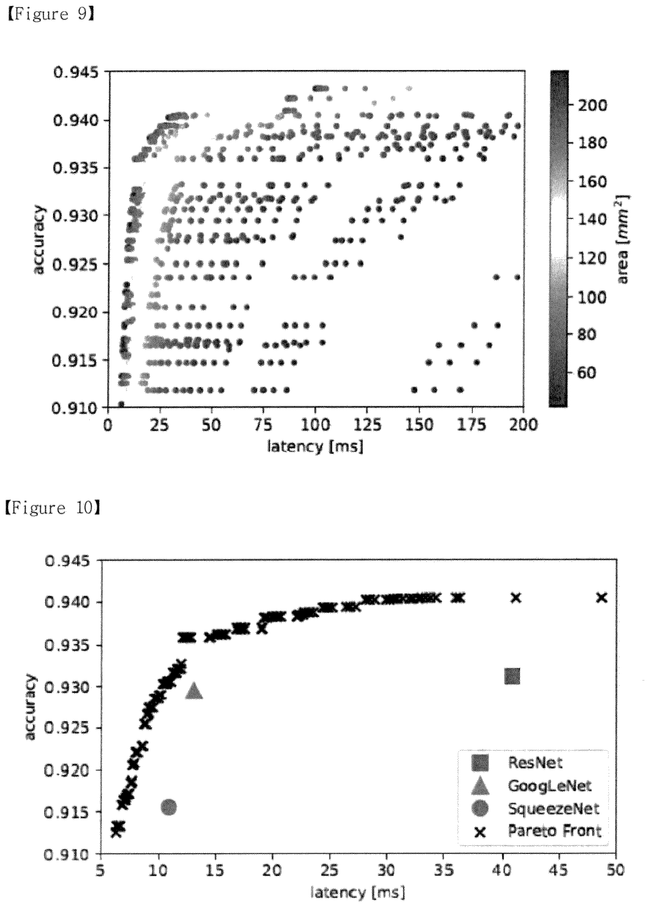

As shown in Figure 4A, a reward based on these metrics, e.g. latency, size and accuracy is generated (step S408) and this is used to update the selection of the CNN and FPGA (S410). As an illustration of the complexity of this implementation, Figure 9 is a graph illustrating example Pareto-optimal points for example as described in "Multiobjective Optimization, Interactive and Evolutionary Approaches" by Branke et al published by Springer 2008, which is incorporated by reference herein in its entirety. The CNN accuracy in NASBench is precomputed and stored in a database, and the FPGA accelerator model described above runs quickly on a desktop computer. This allows the entire codesign search space to be enumerated with 3.7 billion data points. Pareto-optimal points within the 3.7 billion points are then located by iteratively filtering dominated points from the search space. Dominant points are points which are inferior to at least one other point on all 3 metrics (area, latency, accuracy). The remaining (non-dominated) points are optimal in at least one of our evaluation metrics (area, latency or accuracy). For our search space, there were only 3096 Pareto-optimal model-accelerator pairs and these are shown in Figure 9.

As Figure 9 shows, there is a three-way trade-off between area, latency and accuracy -- to improve one, the other two must degrade. As shown in the scatter plot, the search space includes approximately concentric accuracy-latency trade-off curves, each at a different accelerator area. By modifying the CNN, we roughly move along the concentric accuracy-latency curves. By changing the accelerator hardware, we move across a horizontal line (thus affecting both latency and area).

Figure 10 is a graph illustrating a comparison of the performance of the codesigned CNN and FPGA with models and accelerators found using other methods such as GoogLeNet, ResNet and SqueezeNet. ChaiDNN was hand-optimized to run both GoogLeNet and ResNet according to an embodiment, and as shown in Figure 10, the latency of GoogLeNet is very close to the Pareto Front (e.g., the method described above). However, for ResNet it is much farther away from the Pareto Front. Even though it improves on accuracy compared to GoogLeNet, it is three time away from the Pareto Front on latency as shown in Figure 10. This demonstrates the power of codesigning the model and accelerator compared to sequential design of model followed by accelerator.

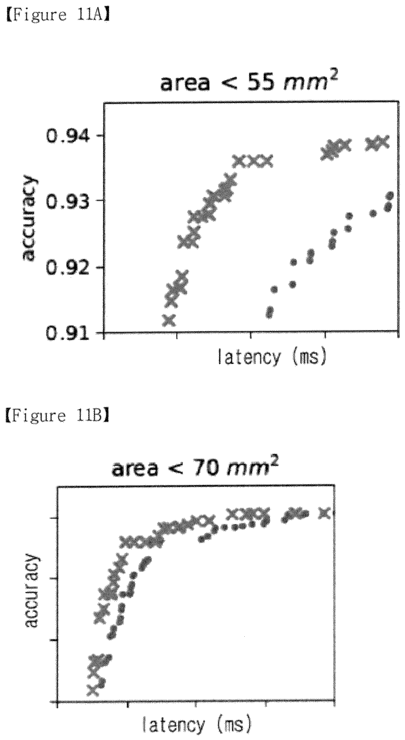

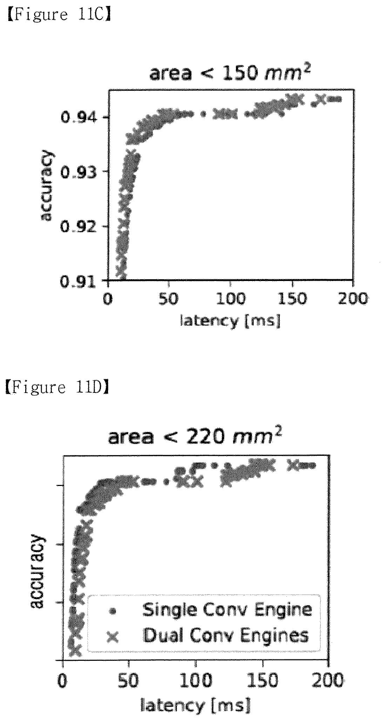

Figures 11A, 11B, 11C and 11D are graphs illustrating example accuracy-latency Pareto frontier for single and dual convolution engines at different area constraints according to an embodiment. As described above, the configurable parameter ratio_conv_engines decides whether there are single or dual engines, and the ratio of DSPs allocated to each of the dual engines. This affects the speed at which 1x1 and 3x3 convolutions run. This accelerator parameter creates an interesting trade-off with the CNN search space. First, a CNN cell needs to be easily parallelizable to benefit from the parameter ratio_conv_engines being less than 1. Second, based on the ratio of 3x3:1x1 operations in the CNN cell, a different ratio_conv_engines will be more efficient. For this parameter, we demonstrate how codesign leads to optimal results and finds the right combination of CNN and accelerator for the best accuracy and efficiency.

Figures 11A, 11B, 11C and 11D show that dual engines are more efficient with tighter area constraints, while a single general engine is generally better when the area constraint is larger. This demonstrates that dual engines are indeed a useful accelerator feature -- this is a non-obvious conclusion given the interaction between CNN model parallelism, the scheduling algorithm for dual engines, and the ratio of DSPs allocated to each type of convolution engine. Arriving at this conclusion would not be possible if we were studying this accelerator feature with a single CNN model, or even a handful of hand-designed models -- dual engines may simply be unsuitable for these specific handful of hand-designed models. However, through codesign, we can search for the best model to fit a given accelerator feature among hundreds of thousands of CNN models.

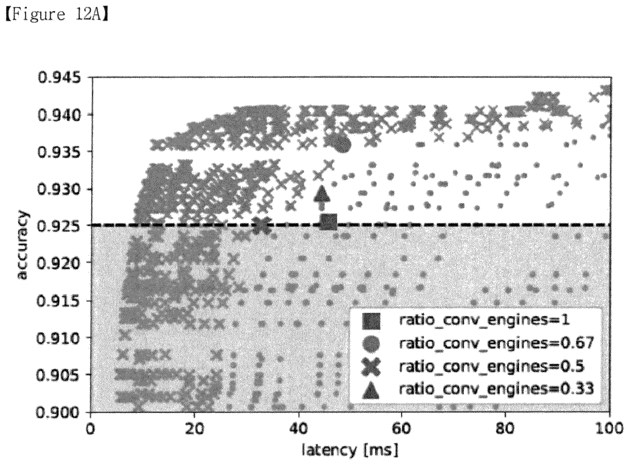

Having established that dual specialized engines can be a useful accelerator compute core, we take a closer look at the actual ratio of DSPs allocated to 1x1 and 3x3 convolutions. In a realistic NAS search scenario, we may constrain area for a specific FPGA device, and look for the fastest model that beats a certain accuracy threshold. Figure 12A is a graph illustrating the results of these constraints, when searching through the Pareto-optimal points according to an embodiment. The top four models found for each different ratio_conv_engines value are highlighted. The discovered points demonstrate the indeterpendence between CNN model and accelerator architectures. For example, there are more conv1x1 operations in the CNN cell when the accelerator contains more compute for 1x1 convolutions and similarly for conv3x3.

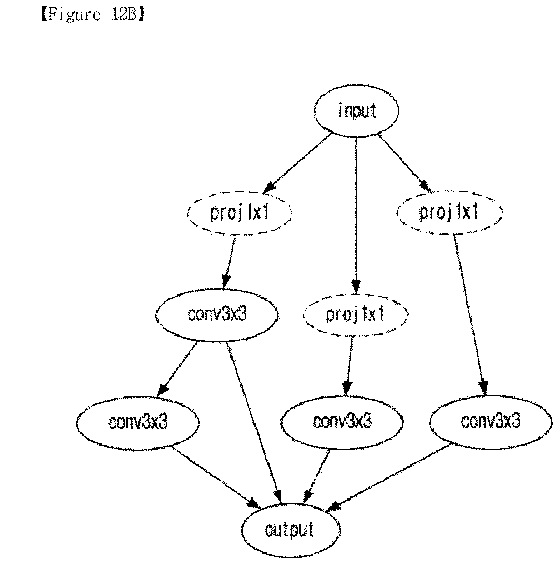

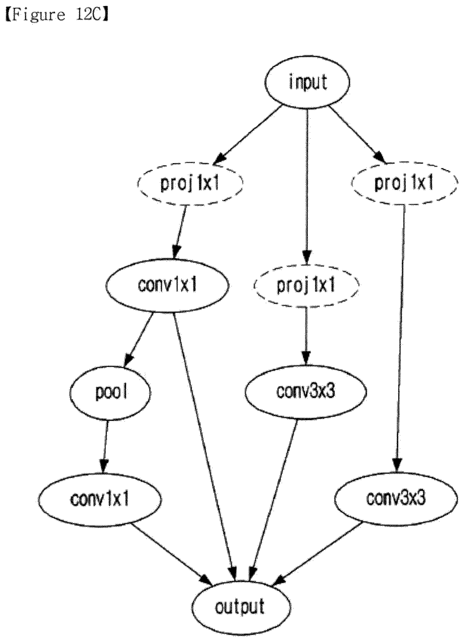

Figures 12B and 12C are diagrams illustrating example CNN cells corresponding to ratio_conv_engines equal to 0.33 and 0.67 respectively according to an embodiment. As shown, when ratio_conv_engines=0.67, the best model had three 1x1 convolutions and four 3x3s, whereas for ratio_conv_engines=0.33 the counts shifted to five 1x1s and two 3x3s.

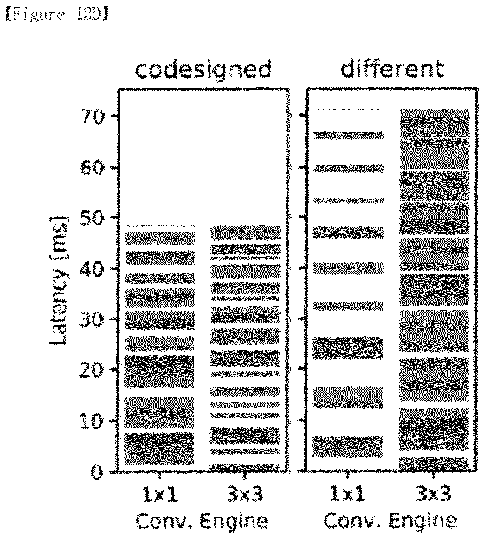

Figure 12D is a diagram comparing the execution schedule for the CNN in Figure 12C run on either its codesigned accelerator, or a "different" accelerator, e.g., the accelerator that was codesigned for the CNN in Figure 10C according to an embodiment. Both designs were subject to the same area constraint. As the figure shows, latency on the codesigned accelerator is much lower (48 ms vs. 72 ms), and utilization of the convolution engines is much higher, whereas on the "different" accelerator it is clear that the 1x1 engine is underutilized, while the 3x3 engine becomes the bottleneck.

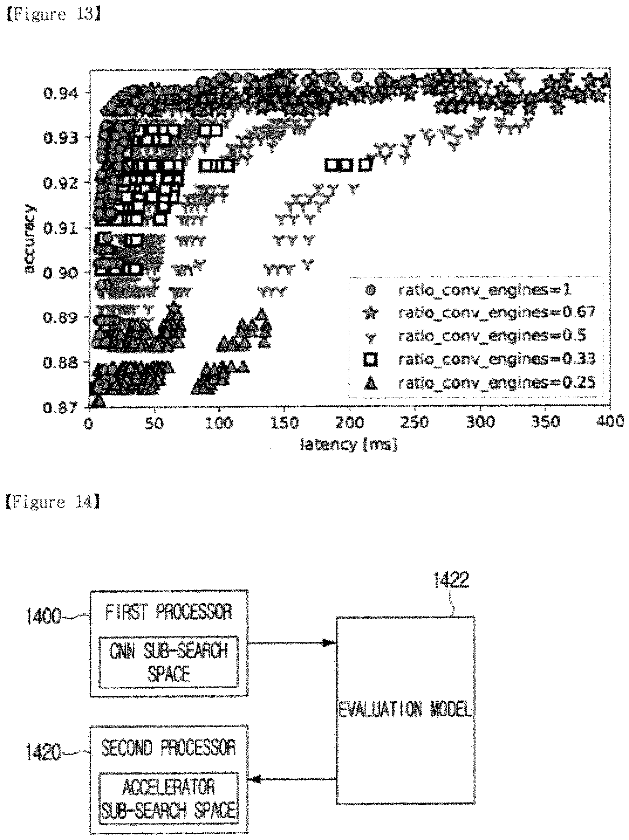

Figure 13 is a graph illustrating the overall landscape of Pareto-optimal codesigned CNN model accelerator pairs with respect to the parameter ratio_conv_engines according to an embodiment. As the plot shows, when more DSPs are allocated for 1x1 convolutions (ratio=0.25), the Pareto-optimal designs have low accuracy. Conversely, when more compute is assigned to 3x3 convolutions (ratio=0.67), we get higher-accuracy points. Indeed, this likely follows from the fact that increased use of 3x3 convolutions leads to higher accuracy. Additionally, a single convolution engine seems to be superior for low latency designs. Furthermore, when ratio=0.5 or 0.33, we find similar points. We can continue to draw useful observations in this way to help guide the manual design of accelerators. However, as described above, the aim is to automate the search using NAS.

A machine-learning task (e.g. image classification) can be represented as a DNN search space, and the hardware accelerator can be expressed through its parameters (forming an FPGA search space). As shown in Figure 4A, a reward based on metrics, e.g. latency, size and accuracy is generated (step S208) and this is used to update the selection of the CNN and FPGA (S410). These steps may be carried out using multiobjective optimization (MOO) of latency, accuracy and area, and different search algorithms for navigating the codesign search space as described below.

As described above, there is a fundamental trade-off between the three metrics and thus, there is no trivial solution to the optimization problem. Additional steps must thus be taken in order to be able to define "better" and "worse" codesigns. Ultimately, we want a function which would take the metrics in interest and return a scalar value, interpreted as quality of the related codesign. We will use this function as our reward function R from the Algorithm REINFORCE shown above.

Two standard approaches to the MOO problem are considered. The first one is to combine the three metrics using a weighted sum into one objective function as described in "Multiobjective Optimization, Interactive and Evolutionary Approaches" by Branke et al published by Springer 2008, which is incorporated by reference herein in its entirety. The second one is to only consider the set of points which have all but one metric below/above a certain threshold and later optimize for the remaining metric (. - constraint method). We then also consider hybrid approaches where either fewer metrics are constrained and/or we also consider the constrained metrics when calculating the reward function. Formally, a generic MOO reward function we use in this work can be defined as Equation 6:

【Equation 6】

$$\mathcal{R} : \{\mathbf{m} \mid \mathbf{m} \in \mathbb{R}^n \wedge \forall_i[\mathbf{m}_i \leq \mathbf{th}_i]\} \rightarrow \mathbb{R}$$

$$\mathcal{R}(\mathbf{m}) = \mathbf{w} \cdot \mathbf{m}$$

where m is the vector of metrics we want to optimize for, w is the vector of their weights and is the vector of thresholds used to constrain the function's domain.

For cases where at least two metrics are summed together we normalize their values to make them more comparable between each other, as different metrics use different units and have values from different ranges. A similar effect could be achieved by adjusting their weights relatively to their absolute values but we found normalized values easier to reason about. That being said, even after normalization it is still not apparent how different metrics contribute to the objective function for a given set of weights.

A small technicality we had to face is that the RL algorithms work by maximizing the reward function, but different metrics require different types of optimization (max for accuracy and min for area and latency). We deal with that by taking negative area and latency as our inputs to the reward function. Whenever we do a weighted sum, we also take care to produce positive values for all the metrics by handling negative values during their normalization.

We explore three different normalization strategies which are described in more detail in "Function-Transformation Methods for multi-objective optimization" by Marlez et al published in Engineering Optimization 37, 6 (2005), 551-570, the disclosure of which is incorporated by reference herein in its entirety. The first is max normalization which is one of the most common methods and normalizes values with respect to their achievable maximum. For negative values, we consider their absolute value and process them analogically. In that case, our normalization function can be formally defined as Equation 7.

[Equation 7]

$$N(x) = \begin{cases} \dfrac{x}{x_{max}} & \text{if } x \geq 0 \\ 1 - \dfrac{|x|}{|x_{min}|} & \text{otherwise} \end{cases} \tag{9}$$

Another common normalization method is min-max normalization in which both the minimum and maximum of a metric are considered. This range is then mapped linearly to the [0,1] range. The specific function can be defined as Equation 8

[Equation 8]

$$N(x) = \frac{x - x_{min}}{x_{max} - x_{min}} \tag{10}$$

The third normalization method is standard deviation normalization in which values are normalized using their standard deviation. The equation can be defined as Equation 9

[Equation 9]

$$N(x) = \frac{x}{\sqrt{\mathbb{E}x^2 - (\mathbb{E}x)^2}} \tag{11}$$

By combining the generic weighted sum equation (equation 6) with the chosen normalization function (one of equations 7 to 9, for example equation 8), the MOO problem can be defined as Equation 10.
[Equation 10]

$$R(ar, lat, acc) = w_1 \aleph(-ar) + w_2 \aleph(-lat) + w_3 \aleph(acc)$$

$$\max_{s \in S} R(-ar, -lat, acc) \quad (12)$$

where ar is area, lat is latency, acc is accuracy), w1, w2, w3 are the set of weights for each of area, latency and accuracy and the optimisation is performed over the search space s· S such that the evaluation model output · (s)=m satisfies given constraints (e.g. latency below a certain value).

If a search point does not meet a specified constraint, a punishment function Rv is used as feedback for the processor to deter it from searching for similar points that fall below our requirements. Since the standard reward function is positive and we want to discourage the processor from selecting invalid points, a simple solution is to make the punishment function negative. We use the same function as the standard reward function R but with two changes: 1) instead of (ar, lat, acc), we take (ar-arth, lat-latth, acc-accth) and 2) we take its opposite to make Rv negative thus informing the processor that this was a bad selection.

Different weights for the MOO problem may also be considered to explore how their selection affects the outcome of the search. For example, the weights may be set to be equal for each metric, e.g. 1/3, or the weights may be set to prioritise one metric, e.g. by setting w1 to 0.5 and w2 and w3 1 to 0.25 to prioritise area when solving the optimization problem. Each weight may be in the range [0,1] with the sum of the weights equal to 1.

There are two approaches for updating the selection of the CNN and FPGA (S410). In a first approach, both sub-search spaces may be considered together so that the algorithm is implemented directly on both spaces. Such an approach may be termed a combined search. This strategy has the ability to update both the CNN and the accelerator in each step, and is therefore able to make faster changes to adapt to the reward function. However, the combined search space (e.g., SNNxSFPGA) is much larger, which may make it more difficult to find the best points (e.g., best selections). Accordingly, each experiment is run for a maximum number of steps, e.g. 10,000 steps and the metrics are evaluated so that the reward function may be calculated.

When running an actual search, it is important to consider invalid and constrained points which can be selected by the processor(s) as well as the appropriate reaction when such points are identified. This behavior does not fit within the standard MOO formulation because MOO does not have the notion of exploration; rather it simply provides means of qualifying multi-dimensional points in a comparable way. However, when running a search, the reward function has additional meaning because it is directly used to guide the processor(s) towards desired outcomes. Therefore, simply ignoring invalid and constrained points can potentially lead to the situations when the processor's feedback is related to only one metric, which can later lead to the processor selecting more points which maximise it without considering the other two. Thus, it is preferred to provide a complementary reward function to use with invalid and constrained points whenever we use weights equal to zero for some of the metrics within the standard reward function. Otherwise, we risk the situation when the processor(s) simply does not consider some of the metrics when learning to navigate the space.

As described above, the method co-designs the FPGA and CNN, for example by use of a combined search. As an alternative to a combined search, the search may have explicitly defined specialized phases during which one part (e.g. the FPGA design) is fixed or frozen so that the search focusses on the other part (e.g. the CNN design) or vice versa.

Figure 14 is a block diagram illustrating an example alternative architecture which may be used to implement the phased searching according to an embodiment. As shown, there are two different processors (e.g., each including processing circuitry) 1400, 1420 and an evaluation model 1422. FIG. 14 illustrates that the evaluation model 1422 is loaded to a separate volatile memory, not the processor 1400, 1420, but this is merely an example, and the evaluation model 1422 may be loaded to each processor. The first processor 1400 learns to optimize CNN structure and a second processor 1420 to select the best combination of options for the FPGA design.

When running such a search, the number of steps for each CNN phase may be greater than the number of steps for each FPGA phase, e.g. 1000 compared to 200 steps. The two phases are interleaved and repeated multiple times, until we hit the total number of steps (e.g. 10,000 steps). This phased solution is used to find a globally optimal solution. This divide-and-conquer technique considers the two search spaces separately which may make it easier to find better locally-optimal points (per search space). However, mutual impact between the phases is limited, which may make it more difficult to adapt the CNN and accelerator to each other optimally, e.g. to perform a particular task.

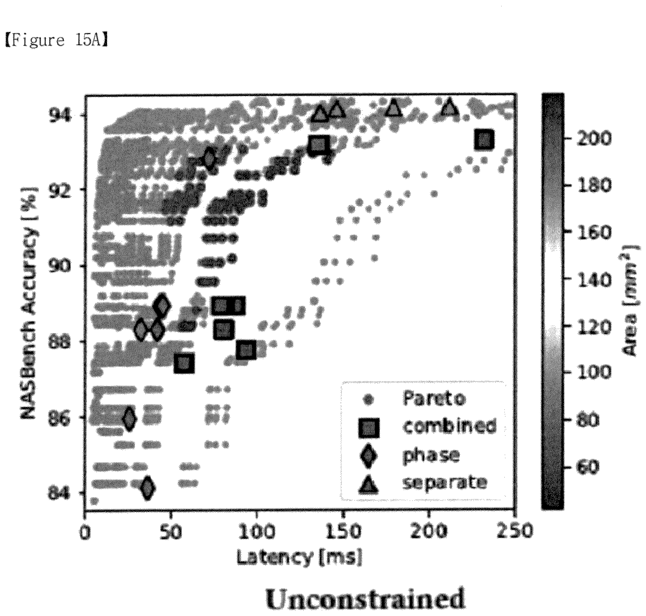

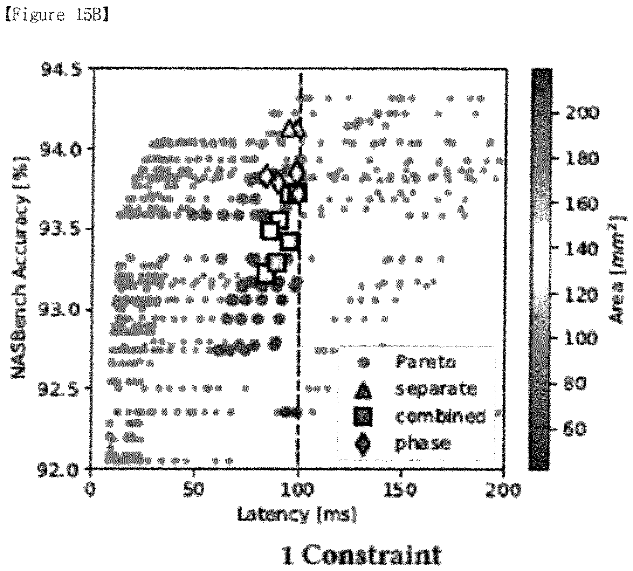

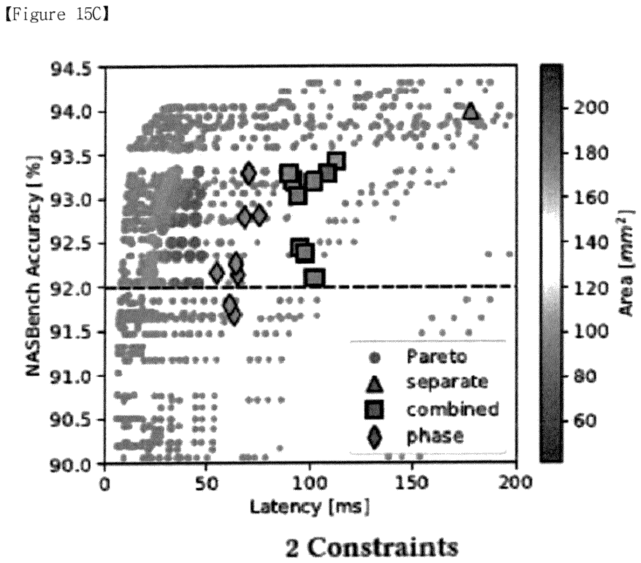

Figures 15A, 15B and 15C are graphs illustrating the top search results compared to the top 100 Pareto optimal points according to an embodiment. Each of the Figures shows the results of the combined and phased searches described above. As a baseline, these proposed searches are compared to a separate search strategy in which the CNN search space is first searched for a CNN and then the accelerator design space is searched, e.g. the sequential search method of the prior art. There are two separate phases and not multiple interleaved phases as described above. The search for the CNN by the first processor 1400 takes place in 8,333 steps and the search for the FGPA by the second processor 1420 takes place in 1,334 steps. Each of the top search results shown in Figures 15A to 15C maximizes the reward function for one of three experimental variations. Each experiment is repeated ten times and thus there are a maximum of ten points for each strategy. A good search algorithm would be expected to produce results in the vicinity of the top Pareto optimal points.

Figure 15A shows the results for the "unconstrained" experiment in which there are no constraints imposed in the reward function of equation 10 above. The weights are arbitrarily chosen as w(area, lat, acc) = (0.1, 0.8, 0.1). As shown in Figure 15A, this experiment may be useful to simply search for many good points to understand the codesign space. Figure 15B shows the results for the experiment in which a single constraint is imposed, namely latency is less than 100 ms. The weights are chosen as w(area, lat, acc) 10 = (0.1, 0, 0.9). This experiment mimics the scenario in which an end-user may know the task and real-time requirements but is not sure which FPGA device to choose and the accuracy attainable at each device size may aid such a decision. Figure 15C shows the results for the experiment in which two constraints are imposed, namely accuracy is greater than 0.92 and the area is less than 100 mm2. The weights are chosen as w(area, lat, acc) =(0, 1, 0) to optimize latency. By imposing two constraints, the experiment as a single objective. Such an experiment may be useful when there is a maximum FPGA area budget and a minimum tolerated accuracy for the application.

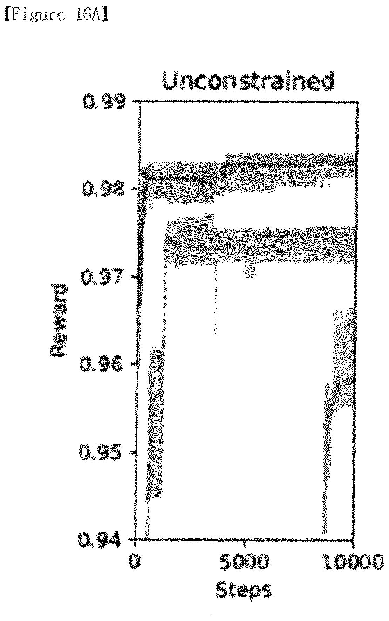

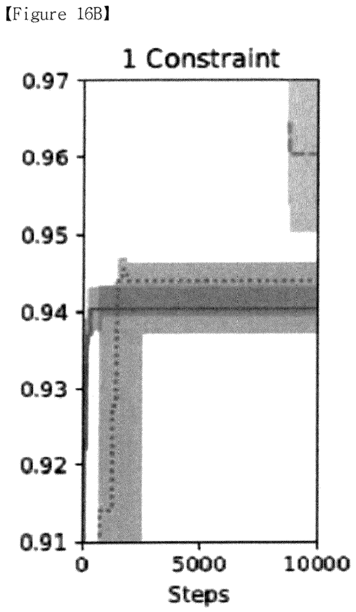

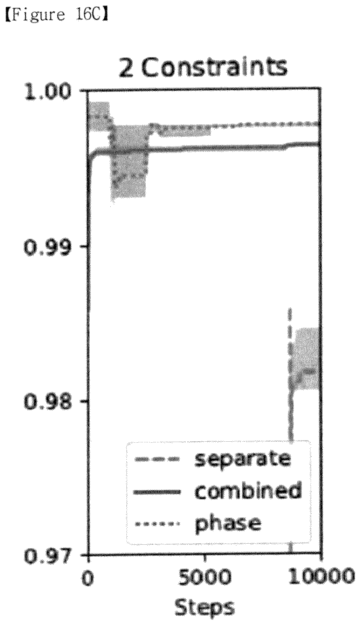

Figures 16A, 16B and 16C are diagrams illustrating example reward values for each of the separate, combined and phased search strategies in the three experimental scenarios. Figure 16A shows the results for the "unconstrained" experiment in which there are no constraints, Figure 16B shows the results for the experiment in which a single constraint is imposed, and Figure 16C shows the results for the experiment in which two constraints are imposed. Only the reward function R and not the punishment function Rv is shown on the plot.

Figures 15A, 15B, 15C, 16A, 16B and 16C show that the separate search cannot consistently find good points within the constraints. This is because it searches for the most accurate CNN model without any context of the HW target platform. Figure 15B shows two "lucky" separate points that are superior to other searches and Figure 16B shows the higher reward. However, the plots do not show that the eight remaining points all have latencies that are much higher than the constraint. This is true for all of Figures 15A, 15B and 15C in which only a few separate points fit within the displayed axes and the rest of the points are generally high accuracy but very low efficiency. This shows the randomness of CNNs that are designed without HW context. They may or may not fall within efficiency constraints based on chance, further motivating the need for a joint co-design methodology.

Figure 15A, 15B, 15C, 16A, 16B and 16C show that the phased and combined search strategies improve upon the separate search because they take the HW accelerator into account and more importantly, they consider all variants of the hardware accelerator and all variants of the CNN simultaneously. Figures 16A, 16B and 16C show that the combined search strategy is generally better in the unconstrained experiment shown in Figure 16A whereas the phased search strategy achieves a higher reward for both the constrained experiments shown in Figures 16B and 16C. This is also shown in Figure 15C in which the phased search gets close to the ideal points. However, Figure 15C also shows a shortcoming of the phased search, namely it is more prone to missing the specified constraints, perhaps because there are only limited opportunities to switch from the CNN search phase to the FPGA search phase within the 10,000 steps limit of the experiment. Increasing the number of search steps may refer, for example, to the phased search being able to find points within the constraints but increased the run-time of the experiment.

More generally, the phased search is slower to converge compared to the combined search. This is highlighted in Figures 16A, 16B and 16C which show that the phased search goes through a few exploration phases before finding its best result. Thus, both the phased and combined searches appear to have merits relative to one another. The combined search appears to work better when the search is unconstrained and is generally faster to converge to a solution. The phased search finds better points when there are constraints but typically requires more search steps to do so.

As explained above with reference to Figure 5, the CNN search space used in the analysis described above may be referred to as NASBench. In this search space, the CNNs have been trained to perform ImageNet classification. To validate the results shown above, we use the co-design method to discover a CNN model-accelerator pair which optimises a different task, e.g. Cifar-100 image classification. It is noted that Cifar-100 image classification is almost as difficult as ImageNet classification which is reflected by its Top-1 accuracy numbers being typically similar to ImageNet19. However, Cifar-100 has a much smaller training set (60K vs 25 1M) and thus training a CNN to perform Cifar-100 image classification is approximately two orders of magnitude faster than ImageNet classification. This makes it more feasible for the infrastructure available for the experiments described in this application.

All the discovered CNNs must be trained from scratch to perform such a task. Nevertheless, the same search space SCNN which is described above may still be used. Training such as that described in "NAS-Bench-101: Towards Reproducible Neural Architecture Search" by Ying et al published in Feb 2019 in arXiv e-prints, which is incorporated by reference herein in its entirety. There are 108 epochs of training using standard data augmentation (padding, random crop and flipping), an

initial learning rate of 0.1 with cosine decaying and weights decay of 10-4. Training each new CNN takes approximately 1-GPU hour, so to be able to train many models, we parallelize co-design NAS over six machines, each with eight Nvidia-1080 GPUs each allowing 48 models to be trained in parallel.

The co-design search is run with two constraints combined into one. Specifically, latency and area are combined into a metric termed performance per area (perf/area) and this metric is constrained to a threshold value. Accuracy is then maximised under this constraint. The performance per area threshold is gradually increased according to (2, 8, 16, 30, 40) and the search is run for approximately 2300 valid points in total, starting with 300 points at the first threshold value and increasing to 1000 points for the last threshold value. This appeared to make it easier for the processor to learn the structure of high-accuracy CNNs. The combined search strategy described above is used because it is faster to converge on a solution.

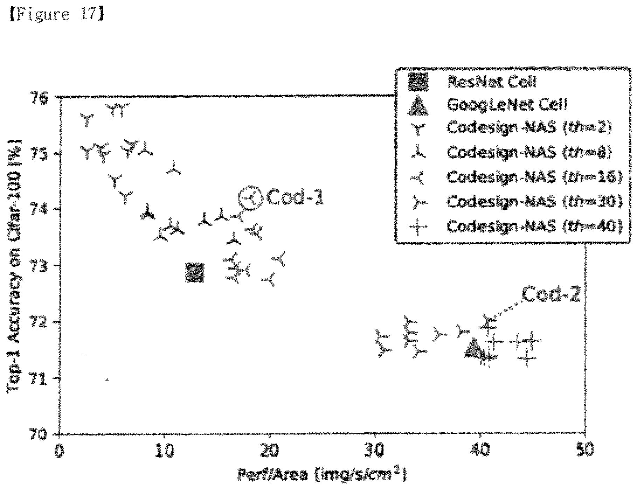

Figure 17 is a graph illustrating the top-1 accuracy and perf/area of various points searched using the combined search. The top 10 points among the model-accelerator points visited at each threshold value are plotted. The plot also shows the ResNet and GoogLeNet cells within the CNN skeleton shown in Figure 5 and these are paired with their most optimal accelerator in terms of perf/area. This is a difficult baseline to beat as we are comparing against two well1 known high-accuracy CNN cells when implemented on their best possible corresponding accelerator in our FPGA search space. However, as the plot shows, we find many points that exceed both the accuracy and efficiency of both the ResNet and GoogLeNet baselines.

The best two points are labelled Cod-1 and Cod-2 respectively. Their performance is shown in the table 2 below:

[Table 2]

| CNN | Accuracy (%) | Perf/Area (img/s/cm$^2$) | Latency (ms) | Area (mm$^2$) |
|---|---|---|---|---|
| ResNet Cell | 72.9 | 12.8 | 42.0 | 186 |
| Cod-1 | 74.2 (+1.8%) | 18.1 (+41%) | 41.8 (-0.5%) | 132 (-29%) |
| GoogLeNet Cell | 71.5 | 39.3 | 19.3 | 132 (-0.8%) |
| Cod-2 | 72.0 (+0.7%) | 40.6 (+3.3%) | 18.5 (-4.2%) | 133 |

Cod-1 improves upon ResNet by 1.8% accuracy while simultaneously improving perf/area by 41%. These are considerable gains on both accuracy and efficiency. Cod-2 shows more modest improvements over GoogLeNet but still beats it on both efficiency and accuracy while running 4.2% faster in terms of absolute latency.

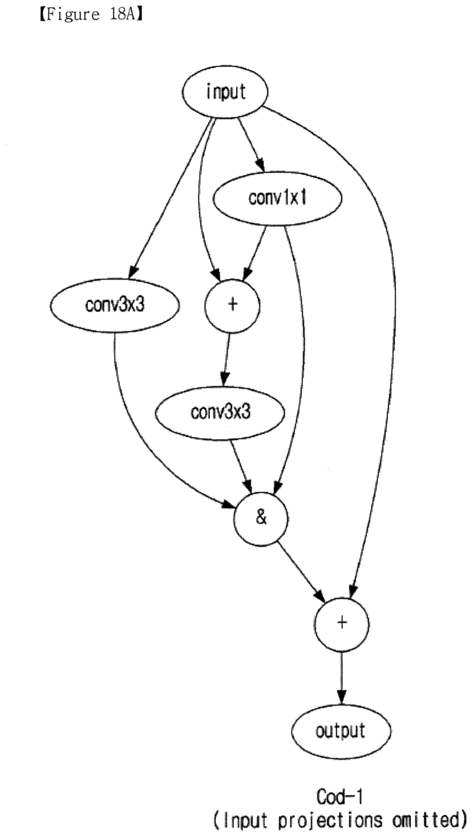

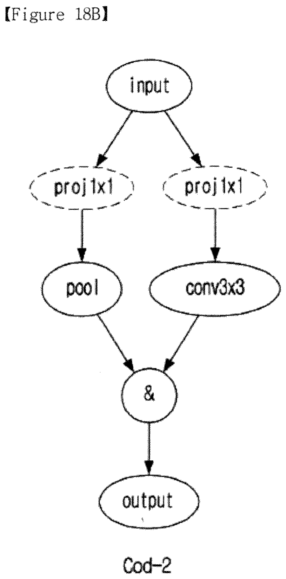

Figures 18A and 18B are diagrams illustrating the model structure of Cod-1 and Cod-2 respectively and the table 3 below lists the HW parameters.

[Table 3]

| HW파라미터 | Cod-1 | Cod-2 |
|---|---|---|
| Filter_par, pixel_par | (16, 64) | (16, 64) |
| Buffer depths | (4K, 2K, 4K) | (8K, 2K, 2K) |
| Mem_interface_width | 256 | 512 |
| Pool_engine | False | False |
| Ratio_conv_engines | 0.33 | 0.25 |

Cod-1 manages to beat ResNet accuracy but use an important ResNet feature: skip connections and element-wise addition as shown by the rightmost branch of the cell in Figure 18A. On the hardware side, both Cod-1 and Cod-2 use the largest convolution engine and avoid the use of a dedicated pooling engine. However, the other HW parameters are tailored for each CNN. For example, both the input buffer size and the memory interface width are smaller for Cod-1 than Cod-2. This may be due to the fact that the Cod-1 CNN uses a larger number of smaller convolutions compared to Cod-2.

It is possible that there are better points than Cod-1 and Cod-2 because the search space has approximately 3.7 billion points int total. Only approximately 1000 points were explored before finding Cod-1 and approximately 2000 points before finding Cod-2. This highlights the speed of convergence at the processor when using the combined search. It is also effective at finding good designs, especially when properly tuned with representative reward functions and search strategies as described above.

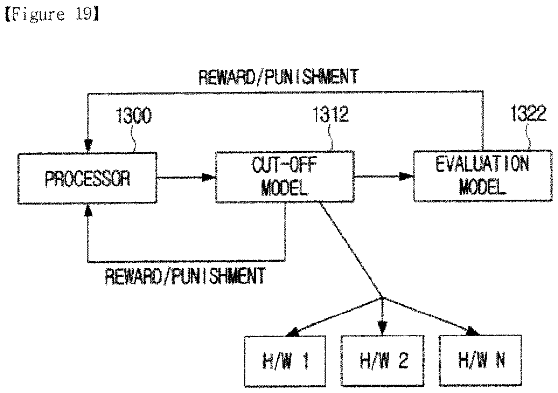

Figure 19 is a block diagram illustrating an example alternative system which may be used to search the CNN search space as a stand-alone improvement to the arrangement or incorporated in the arrangement of Figure 4A according to an embodiment. In this arrangement, the processor (e.g., including processing circuitry) 1300 proposes a model architecture for the CNN which is fed to a cut-off model 1312. The cut-off model 1312 uses hardware metrics, such as thresholds on latency and memory footprint, as a cut-off to provide quick feedback to the processor 1300. If the proposed model does not meet the hardware criteria, the processor receives feedback to discourage it from proposing similarly underperforming models. This will allow the processor 1300 to focus on proposing models that meet the hardware constraints. If the proposed model does meet the hardware criteria, the model is sent to the evaluation model 1322 for a more detailed evaluation, e.g. to generate a reward function, as described above.

The cut-off model 1312 may be dynamic so that the hardware metrics may change as the search progresses to improve the models which are located by the search. For example, if the initial latency threshold is 100ms but many models have a latency equal to 50 ms, the latency threshold may be updated on the fly (e.g. in real-time) to e.g. 60 ms. In this 30 way, more models will be excluded from the search and the overall searching process will be expedited.

As schematically illustrated, the cut-off model may simultaneously use a plurality of hardware devices, H/W 1, H/W 2, ··· H/W N, to search for models that fit all devices.

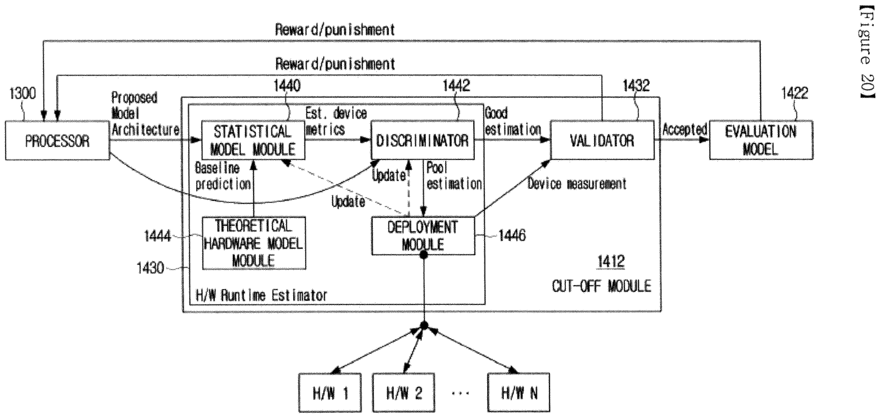

Figure 20 is a diagram illustrating an example of a more sophisticated version of the system of Figure 19 in which the cut-off model 1412 comprises a hardware runtime estimator 1430 and a validator 1432 according to an embodiment. The hardware runtime estimator 1430 is used to predict the hardware performance, e.g. latency, of a proposed model by the processor on a target hardware platform(s). This is not a trivial task because the relationship between the total number of FLOPS needed for running a proposed model architecture or its parameter size has a nonlinear relationship with latency on a specific hardware platform due to variations in on/off chip memory utilization, memory footprint, degree of parallelism, area usage, clock speed or any other relevant task or hardware metric.

The hardware runtime estimator 1430 comprises a statistical model module 1440, a discriminator 1442, a theoretical hardware model module 1444 and a deployment module 1446. The statistical model module 1440 is used to predict (e.g., estimate) the hardware metrics and send these to the discriminator 1442. Initially, the statistical model is based on a theoretical model which is computed in the theoretical hardware model module 1444 to give a baseline prediction which is sent to the statistical model module 1440. The models may suffer from poor prediction quality, particularly the initial models. Accordingly, the discriminator 1442 monitors the confidence of the results from the statistical model.

When the confidence in the estimated hardware metrics is low (e.g. below a confidence threshold), the proposed architecture may be sent to a deployment module 1446 for deployment on the target hardware, e.g. one of hardware devices, H/W 1, H/W 2, ··· H/W N. The latency (or other hardware metric) is measured and this measurement is sent to the statistical model module 1440 to update the statistical model. This measurement is also sent to the discriminator 1442 to update the monitoring process within the discriminator. The actual measurement rather than the estimated value is then sent with the model to the validator 1432. When the confidence in the estimated hardware metrics is good (e.g. above a threshold), the model is sent straight to the validator 1432.

Once the validator 1432 has received the model with its estimated hardware value(s) or measured hardware value(s), the validator 1432 checks if the proposed architecture meets all the hardware metrics. In other words, the validator 1432 may compare the hardware value(s) to the defined thresholds to determine if the hardware constraints are met. If the proposed model does meet the hardware criteria, the model is sent to the evaluation model 1422 for a more detailed evaluation, e.g. to generate a reward function, as described above. Accordingly, it is clear that in this arrangement, the processor 1400 sends all proposed model architectures for the CNN to the hardware runtime estimator 1430. Specifically, as shown in the Figure, the proposed model architectures are sent to the statistical model module 1440 and the discriminator 1442.

The method described in Figure 20 may be used to model the steps of implementation and evaluation in Figure 4A (step S404 and step S406). This may result in a quicker run time because it is not necessary to pool hardware for every iteration. It is also noted that the overall search procedure may be configured by providing an overall GPU time budget. Thus, at the end of the computational budget, we get the best model meeting all the requirements.

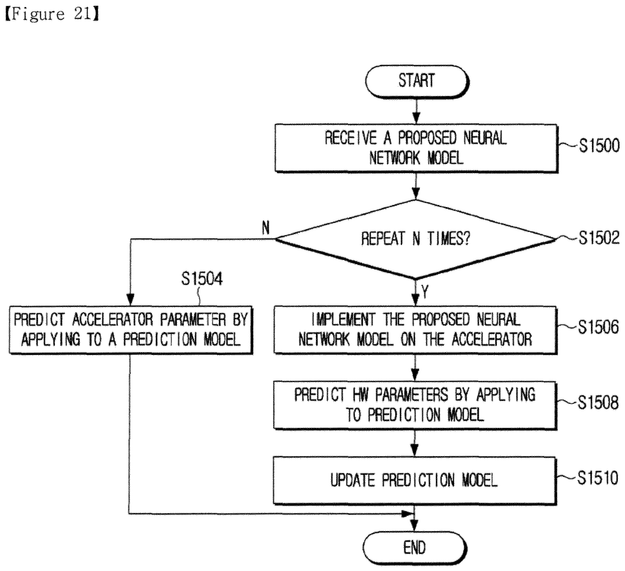

Figure 21 is a flowchart illustrating an example method for continuously updating the statistical model used in the statistical model module. The method may be carried out in the run-time estimator using one or more of the modules therein. As shown in a first step, the proposed model of the CNN is received (step S1500), e.g. from the processor as described above. Before running the statistical model, processor identifies how many proposed models have previously been transmitted to statistical model. For example, the processor may identify whether the proposed neural network model (for example, CNN model) is transmitted by repeating for N times in step S1502. Here, the N times may refer to a threshold number, may be a predetermined number, and may be the number derived through an experiment, statistics, or the like. If the process has run fewer than a threshold number, e.g. N, of iterations of the statistical model ( "No" in S1502), the statistical model is applied to the received model to predict the hardware parameters such as latency which occur when the selected model is run on the FPGA (step S1504). The process then loops back to the start to repeat for the next received model.

If there have already been more than N-iterations of the statistical model ( "Yes" in S1502), the proposed model is run on actual hardware, e.g. using the deployment module and one of the plurality of hardware modules shown in Figure 19, to provide real measurements of the hardware parameters (step S1506). The statistical model is also applied to predict the hardware parameters (step S1508). These steps are shown as sequential but it will be appreciated that they may be performed simultaneously or in the other order. If there is a discrepancy between the predicted and measured parameters, the measured parameters may be used to update the statistical model (step S1510). The process then loops back to the start to repeat for the next received model.

Such a method allows scaling and improves run times when compared to a method which always uses actual hardware to determine performance. For example, multiple threads or processes may use the statistical model to search for new CNN models, whilst a single actual hardware device is used to update the statistical model infrequently. The statistical model is likely to be more accurate and up-to-date using the regular measurements. A statistical model only performs as well as the training data from which it was created. As the searches for new CNN models are carried out, they may move into different search spaces including data on which the original model was not trained. Therefore, updating the statistical model with measurements helps to ensure that the statistical model continues to predict representative hardware metrics which in turn are used to guide the search. Any error between the predicted and measured hardware metrics may also be used to tune the number of iterations between implementing the CNN model on the hardware. For example, when the error increases, the number of iterations between polling the hardware may be reduced and vice versa.

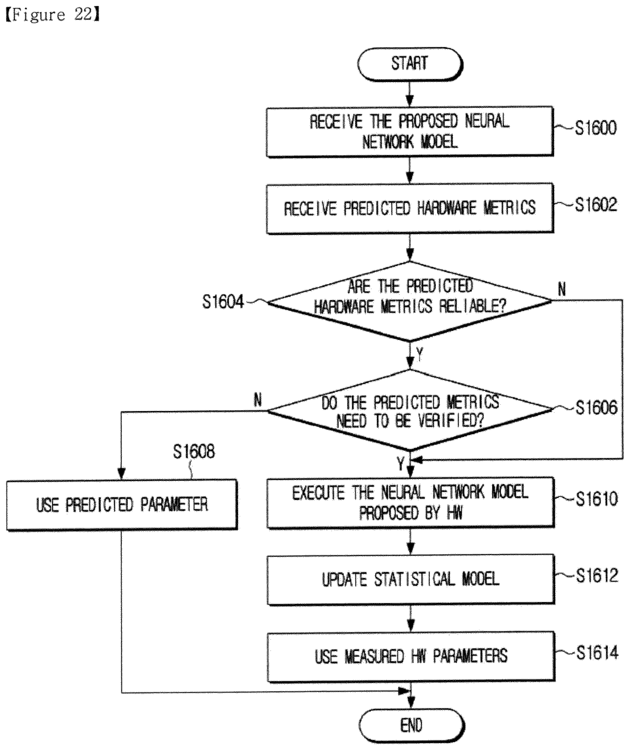

Figure 22 is a flowchart illustrating an example of how a similar method to that shown in Figure 21 may be used by the discriminator of Figure 20 to help the discriminator learn how to distinguish between trustworthy predictions and invalid predictions according to an embodiment. The proposed technique may improve the awareness of the hardware within the selection process by generating a much better statistical model without impacting significantly on the run time of the selection process.

As shown in steps S1600 and S1602, the discriminator receives the proposed model, e.g. from the processor, and the predicted hardware metrics, e.g. from the statistical model. These steps are shown in a particular order but it is appreciated that the information may be received simultaneously or in a different order. The discriminator determines whether the predicted hardware metrics may be trusted (step S1604) and in this method, when the discriminator determines that the predicted metrics can be trusted ( "Yes" in S1604), there is an optional additional step of the discriminator determining whether the predicted metrics need to be verified (step S1606). The verification decision may be made according to different policies, e.g. after a fixed number of iterations, at random intervals or by assessing outputs of the system. If no verification is required ( "No" in S1606), the predicted HW parameters are output (step S1608), e.g. to the validator to determine whether to pass the model to the evaluation model as described above.

When the discriminator determines that the predicted metrics cannot be trusted ( "No" in S1604), the proposed model is run on actual hardware to obtain measurements of the hardware metrics (e.g. latency) which are of interest (step S1610). As described above in Figure 21, when there is a discrepancy between the predicted and measured parameters, the measured parameters may be used to update the statistical model (step S1612). The measured HW parameters are output (step S1614), e.g. to the validator to determine whether or not pass the model to the evaluation model as described above. Similarly, when the discriminator determines that the predicted metrics need to be verified ( "Yes" in S1606), the steps of running the proposed model on hardware (step S1610), updating the statistical model as needed (step S1612) and outputting the measured parameters (step S1614). In all cases, once the measured or predicted parameters are output, the process then loops back to the start to repeat for the next received model.

In the description above, the terms hardware metrics and hardware parameters may be used interchangeably. It may be difficult to estimate or measure certain metrics, e.g. latency, and thus proxy metrics such as FLOPs and model size may be used as estimates for the desired metrics. The statistical models described above may be trained using hardware measurements which have been previously captured for particular types of CNN. The statistical models may be built using theoretical models which approximate hardware metrics (such as latency) from model properties (such as number of parameters, FLOPs, connectivity between layers, types of operations etc.). The theoretical models may have distinct equations for each layer type (e.g. convolution, maxpool, relu, etc.) with varying accuracy/fidelity for each layer. Theoretical models may be used instead of statistical models.

In the description above, reference has been made to co-designing or designing a CNN and an FPGA processor. However, it will be appreciated that the method is not just applicable to CNNs but is readily extendable to any neural network using the techniques described above. The method is also more broadly applicable to any parametrizable algorithm which is beneficially implemented in hardware, e.g. compression algorithms and cryptographic algorithms. It is will be appreciated that for the method to work, it is necessary to be able to have a well-defined algorithm search space, e.g. the parametrizable algorithm must be definable by virtue of at least one configurable parameter. For example, in the method described above, the search space is defined by the use of the model described in relation to Figure 4. However, it will be appreciated that this model was merely illustrative and other models of parametrizable algorithms may be used by setting the parameters of the neural network which are to be modelled. Similarly, it will be appreciated that the method may be applicable to other types of hardware and not just FPGA processors.

The processor(s), evaluation model and other modules may include any suitable processing unit capable of accepting data as input, processing the input data in accordance with stored computer-executable instructions, and generating output data. The processor(s), evaluation model and other modules may include any type of suitable processing unit including, but not limited to, a central processing unit, a microprocessor, a Reduced Instruction Set Computer (RISC) microprocessor, a Complex Instruction Set Computer (CISC) microprocessor, a microprocessor, an Application Specific Integrated Circuit (ASIC), a Field-Programmable Gate Array (FPGA), a System-on-a-Chip (SoC), a digital signal processor (DSP), and so forth. In addition, any of the functionality described as being supported by the processor(s), evaluation model and other modules may be implemented, at least partially, in hardware and/or firmware across any number of devices.

Certain aspects of the disclosure are described above with reference to block and flow diagrams of systems, methods, apparatuses, and/or computer program products according to example embodiments. It will be understood that one or more blocks of the block diagrams and flow diagrams, and combinations of blocks in the block diagrams and the flow diagrams, respectively, may be implemented by execution of computer-executable program instructions. Likewise, some blocks of the block diagrams and flow diagrams may not necessarily need to be performed in the order presented, or may not necessarily need to be performed at all, according to some embodiments. Further, additional components and/or operations beyond those depicted in blocks of the block and/or flow diagrams may be present in certain embodiments.

However, it may be understood that the disclosure is not limited to the various example embodiments described, but also includes various modifications, equivalents, and/or alternatives of the embodiments of the disclosure. In relation to explanation of the drawings, similar drawing reference numerals may be used for similar constituent elements.

In this specification, the expressions "have," "may have," "include," or "may include" or the like represent presence of a corresponding feature (for example: components such as numbers, functions, operations, or parts) and does not exclude the presence of additional feature.

In this document, expressions such as "at least one of A [and/or] B," or "one or more of A [and/or] B," include all possible combinations of the listed items. For example, "at least one of A and B," or "at least one of A or B" includes any of (1) at least one A, (2) at least one B, or (3) at least one A and at least one B.

As used herein, the terms "first," "second," or the like may denote various components, regardless of order and/or importance, and may be used to distinguish one component from another, and does not limit the components.

If it is described that a certain element (e.g., first element) is "operatively or communicatively coupled with/to" or is "connected to" another element (e.g., second element), it should be understood that the certain element may be connected to the other element directly or through still another element (e.g., third element). On the other hand, if it is described that a certain element (e.g., first element) is "directly coupled to" or "directly connected to" another element (e.g., second element), it may be understood that there is no element (e.g., third element) between the certain element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" does not necessarily refer to a device being "specifically designed to" in terms of hardware. Instead, under some circumstances, the expression "a device configured to" may refer to the device being "capable of" performing an operation together with another device or component. For example, the phrase "a processor configured to perform A, B, and C" may refer, for example, to a dedicated processor (e.g., an embedded processor) for performing the corresponding operations, or a generic-purpose processor (e.g., a central processing unit (CPU) or an application processor) that can perform the corresponding operations by executing one or more software programs stored in a memory device.

In this disclosure, the term user may refer to a person who uses an electronic apparatus or an apparatus (example: artificial intelligence electronic apparatus) that uses an electronic apparatus.

Meanwhile, various embodiments of the disclosure may be implemented in software, including instructions stored on machine-readable storage media readable by a machine (e.g., a computer). An apparatus may call instructions from the storage medium, and execute the called instruction, including an electronic device (for example, electronic device 100) according to the disclosed embodiments. When the instructions are executed by a processor, the processor may perform a function corresponding to the instructions directly or using other components under the control of the processor. The instructions may include a code generated by a compiler or a code executable by an interpreter. A machine-readable storage medium may be provided in the form of a non-transitory storage medium. Herein, the "non-transitory" storage medium may not include a signal but is tangible, and does not distinguish the case in which a data is semi-permanently stored in a storage medium from the case in which a data is temporarily stored in a storage medium. For example, "non-transitory storage medium" may include a buffer in which data is temporarily stored.

According to an embodiment, the method according to the above-described embodiments may be included in a computer program product. The computer program product may be traded as a product between a seller and a consumer. The computer program product may be distributed online in the form of machine-readable storage media (e.g., compact disc read only memory (CD-ROM)) or through an application store (e.g., Play StoreTM) or distributed online directly. In the case of online distribution, at least a portion of the computer program product may be at least temporarily stored or temporarily generated in a server of the manufacturer, a server of the application store, or a machine-readable storage medium such as memory of a relay server.

According to various embodiments, the respective elements (e.g., module or program) of the elements mentioned above may include a single entity or a plurality of entities. According to the embodiments, at least one element or operation from among the corresponding elements mentioned above may be omitted, or at least one other element or operation may be added. Alternatively or additionally, a plurality of components (e.g., module or program) may be combined to form a single entity. In this case, the integrated entity may perform functions of at least one function of an element of each of the plurality of elements in the same manner as or in a similar manner to that performed by the corresponding element from among the plurality of elements before integration. The module, a program module, or operations executed by other elements according to variety of embodiments may be executed consecutively, in parallel, repeatedly, or heuristically, or at least some operations may be executed according to a different order, may be omitted, or the other operation may be added thereto.

While the disclosure has been illustrated and described with reference to various example embodiments thereof, it will be understood that the various example embodiments are intended to be illustrative, not limiting. It will be further understood by one of ordinary skill in the art that various changes in form and detail may be made without departing from the scope of the disclosure as defined in the appended claims.

**Claims**

1. A method for controlling an electronic device (100) comprising a memory (110) storing a plurality of hardware accelerators (10-1...10-N) and a plurality of neural networks (20-1...20-N), the method comprising:

   selecting a first neural network among the plurality of neural networks (20-1...20-N) and selecting a first accelerator to implement the first neural network among the plurality of accelerators (10-1...10-N);
   implementing the first neural network on the first accelerator to obtain information associated with the implementation;
   obtaining a first reward value based on the information associated with the implementation for the first accelerator and the first neural network;
   selecting a second neural network to be implemented on the first accelerator among the plurality of neural networks;
   implementing the second neural network on the first accelerator to obtain information associated with the implementation;
   obtaining a second reward value based on the information associated with the implementation for the first accelerator and the second neural network;
   selecting a second accelerator, from among the plurality of accelerators except for the first accelerator, to implement the second neural network;
   implementing the second neural network on the second accelerator to obtain information associated with the implementation;
   obtaining a third reward value based on the information associated with the implementation for the second accelerator and the second neural network;
   selecting a neural network and an accelerator pair having a largest reward value among the plurality of neural networks (20-1...20-N) and the plurality of accelerators based on the first reward value, second reward value, and the third reward value
   wherein the selecting the first accelerator and second accelerator to implement a selected neural network comprises:
   inputting the plurality of accelerators (10-1...10-N) into a policy function model (60) to obtain a probability value corresponding to a configurable parameter included in each of the plurality of accelerators (10-1...10-N); and

      selecting the first accelerator and the second accelerator among the plurality of accelerators (10-1...10-N) based on the probability value corresponding to the configurable parameter;
      wherein the configurable parameter includes at least one of: a parallelization parameter, buffer depth, pooling engine parameter, memory interface width parameter and convolution engine ratio parameter.

2. The method of claim 1, wherein the selecting the first accelerator comprises:

   identifying whether a hardware performance of the first accelerator and the first neural network obtained by inputting the first accelerator and the first neural network to a first predictive model (40) satisfies a predetermined criterion; and

based on identification that the obtained hardware performance satisfies the first hardware criterion, implementing the first neural network on the first accelerator to obtain information associated with the implementation.

3. The method of claim 2, wherein
the selecting the second accelerator for implementing the first neural network among the plurality of accelerators (10-1...10-N) other than the first accelerator is based on the identification that the obtained hardware performance does not satisfy the first hardware criterion.

4. The method of claim 1, wherein the information associated with the implementation comprises accuracy and efficiency metrics of implementation.

5. The method of claim 1, wherein the obtaining the first reward value comprises:

   normalizing the obtained accuracy and efficiency metrics; and
   obtaining the first reward value by performing a weighted sum operation for the normalized metrics.

6. The method of claim 1, wherein the selecting a first neural network among the plurality of neural networks (20-1...20-N) comprises:

   obtaining a probability value corresponding to a configurable parameter included in each of the plurality of neural networks (20-1...20-N), said configurable parameter being at least one of an operational mode of each neural network or a layer connection scheme; and
   selecting the first neural network among the plurality of neural networks (20-1...20-N) based on the probability value corresponding to a configurable parameter included in each of the plurality of neural networks (20-1...20-N).

7. The method of claim 1, wherein the selecting a first neural network among the plurality of accelerators and a first accelerator for implementing the first neural network among the plurality of accelerators comprises:
based on selecting the first neural network and before selecting the first accelerator for implementing the first neural network, predicting a hardware performance of the selected first neural network through a second prediction model (50).

8. The method of claim 7, wherein the predicting comprises:

   identifying whether the predicted hardware performance of the first neural network satisfies a second hardware criterion, and
   based on identifying that the predicted hardware performance of the first neural network satisfies the second hardware criterion, selecting the first accelerator for implementing the first neural network.

9. The method of claim 8, wherein the identifying comprises, based on identifying that the hardware performance of the selected first neural network does not satisfy the second hardware criterion, selecting one neural network among a plurality of neural networks (20-1...20-N) other than the first neural network again.

10. An electronic device (100) comprising:

   a memory (110) for storing a plurality of hardware accelerators (10-1...10-N) and a plurality of neural networks (20-1...20-N); and
   a processor (120) configured to:

      select a first neural network among the plurality of neural networks (20-1...20-N) and select a first accelerator to implement the first neural network among the plurality of accelerators (10-1...10-N),
      implement the first neural network on the first accelerator to obtain information associated with the implementation,
      obtain a first reward value based on the information associated with the implementation for the first accelerator and the first neural network,
      select a second neural network to be implemented on the first accelerator among the plurality of neural networks (20-1...20-N),
      implement the second neural network on the first accelerator to obtain information associated with the implementation,

obtain a second reward value based on the information associated with the implementation for the first accelerator and the second neural network, and

select a second accelerator, from among the plurality of accelerators except for the first accelerator, to implement the second neural network;

implement the second neural network on the second accelerator to obtain information associated with the implementation;

obtain a third reward value based on the information associated with the implementation for the second accelerator and the second neural network;

select a neural network and an accelerator pair having a largest reward value among the plurality of neural networks and the plurality of accelerators based on the first reward value, the second reward value, and the third reward value; and

wherein to select the first accelerator and second accelerator to implement a selected neural network comprises to:

input the plurality of accelerators (10-1...10-N) into a policy function model (60) to obtain a probability value corresponding to a configurable parameter included in each of the plurality of accelerators (10-1...10-N); and

select the first accelerator and the second accelerator among the plurality of accelerators (10-1...10-N) based on the probability value corresponding to the configurable parameter;

wherein the configurable parameter includes at least one of: a parallelization parameter, buffer depth, pooling engine parameter, memory interface width parameter and convolution engine ratio parameter.

11. The electronic device of claim 10, wherein the processor (120) is configured to:

identify whether a hardware performance of the first accelerator and the first neural network obtained by inputting the first accelerator and the first neural network to a first predictive model (40) satisfies a predetermined criterion, and

based on identifying that the obtained hardware performance satisfies the first hardware criterion, implement the first neural network on the first accelerator to obtain information associated with the implementation.

12. The electronic device of claim 11, wherein the processor (120) is further configured to select the second accelerator for implementing the first neural network among the plurality of accelerators (10-1...10-N) other than the first accelerator based on identifying that the obtained hardware performance does not satisfy the first hardware criterion.

13. The electronic device of claim 10, wherein the information associated with the implementation comprises accuracy and efficiency metrics of implementation.

14. The electronic device of claim 10, wherein the processor (120) is further configured to normalize the obtained accuracy and efficiency metrics, and to obtain the first reward value by performing a weighted sum operation for the normalized metrics.

**Patentansprüche**

1. Verfahren zur Steuerung einer elektronischen Vorrichtung (100), umfassend einen Speicher (110), der eine Vielzahl von Hardware-Beschleunigern (10-1...10-N) und eine Vielzahl von neuronalen Netzen (20-1...20-N) speichert, wobei das Verfahren Folgendes umfasst:

Auswählen eines ersten neuronalen Netzes aus der Vielzahl von neuronalen Netzen (20-1...20-N) und Auswählen eines ersten Beschleunigers, um das erste neuronale Netz zu implementieren, aus der Vielzahl von Beschleunigern (10-1...10- N);

Implementieren des ersten neuronalen Netzes auf dem ersten Beschleuniger, um Informationen assoziiert mit der Implementierung zu erhalten;

Erhalten eines ersten Belohnungswertes basierend auf den Informationen assoziiert mit der Implementierung für den ersten Beschleuniger und das erste neuronale Netz;

Auswählen eines zweiten neuronalen Netzes, das auf dem ersten Beschleuniger zu implementieren ist, aus der Vielzahl von neuronalen Netzen;

Implementieren des zweiten neuronalen Netzes auf dem ersten Beschleuniger, um Informationen assoziiert mit der Implementierung zu erhalten;

Erhalten eines zweiten Belohnungswertes basierend auf den Informationen assoziiert mit der Implementierung für den ersten Beschleuniger und das zweite neuronale Netz;

Auswählen eines zweiten Beschleunigers aus der Vielzahl von Beschleunigern mit Ausnahme des ersten Beschleunigers, um das zweite neuronale Netz zu implementieren;

Implementieren des zweiten neuronalen Netzes auf dem zweiten Beschleuniger, um Informationen assoziiert mit der Implementierung zu erhalten;

Erhalten eines dritten Belohnungswertes basierend auf den Informationen assoziiert mit der Implementierung für den zweiten Beschleuniger und das zweite neuronale Netz;

Auswählen eines Paares aus einem neuronalen Netz und einem Beschleuniger mit einem größten Belohnungswert aus der Vielzahl von neuronalen Netzen (20-1...20-N) und der Vielzahl von Beschleunigern basierend auf dem ersten Belohnungswert, zweiten Belohnungswert und dem dritten Belohnungswert,

wobei das Auswählen des ersten Beschleunigers und des zweiten Beschleunigers, um ein ausgewähltes neuronales Netz zu implementieren, Folgendes umfasst:

Eingeben der Vielzahl von Beschleunigern (10-1...10-N) in ein Richtlinienfunktionsmodell (60), um einen Wahrscheinlichkeitswert zu erhalten, der einem konfigurierbaren Parameter entspricht, der in jedem aus der Vielzahl von Beschleunigern (10-1...10-N) enthalten ist; und

Auswählen des ersten Beschleunigers und des zweiten Beschleunigers aus der Vielzahl von Beschleunigern (10-1...10-N) basierend auf dem Wahrscheinlichkeitswert, der dem konfigurierbaren Parameter entspricht;

wobei der konfigurierbare Parameter zumindest eines von Folgendem beinhaltet: einem Parallelisierungsparameter, Puffertiefe, Pooling-Motorparameter, Speicherschnittstellenbreitenparameter und Faltungsmotorverhältnisparameter.

2. Verfahren nach Anspruch 1, wobei das Auswählen des ersten Beschleunigers Folgendes umfasst:

Identifizieren, ob eine Hardwareleistung des ersten Beschleunigers und des ersten neuronalen Netzes, die durch Eingeben des ersten Beschleunigers und des ersten neuronalen Netzes in ein erstes prädiktives Modell (40) erhalten wird, ein vorbestimmtes Kriterium erfüllt; und

basierend auf Identifizierung, dass die erhaltene Hardwareleistung das erste Hardwarekriterium erfüllt, Implementieren des ersten neuronalen Netzes auf dem ersten Beschleuniger, um Informationen assoziiert mit der Implementierung zu erhalten.

3. Verfahren nach Anspruch 2, wobei
das Auswählen des zweiten Beschleunigers zum Implementieren des ersten neuronalen Netzes aus der Vielzahl von Beschleunigern (10-1...10-N), die von dem ersten Beschleuniger verschieden sind, auf der Identifizierung basiert, dass die erhaltene Hardwareleistung das erste Hardwarekriterium nicht erfüllt.

4. Verfahren nach Anspruch 1, wobei die Informationen assoziiert mit der Implementierung Genauigkeits- und Effizienzmetriken der Implementierung umfassen.

5. Verfahren nach Anspruch 1, wobei das Erhalten des ersten Belohnungswertes Folgendes umfasst:

Normalisieren der erhaltenen Genauigkeits- und Effizienzmetriken; und
Erhalten des ersten Belohnungswertes durch Durchführen einer gewichteten Summenoperation für die normalisierten Metriken.

6. Verfahren nach Anspruch 1, wobei das Auswählen eines ersten neuronalen Netzes aus der Vielzahl von neuronalen Netzen (20-1...20-N) Folgendes umfasst:

Erhalten eines Wahrscheinlichkeitswertes, der einem konfigurierbaren Parameter entspricht, der in jedem aus der Vielzahl von neuronalen Netzen (20-1...20-N) enthalten ist, wobei der konfigurierbare Parameter zumindest eines von einem Betriebsmodus jedes neuronalen Netzes oder einem Schichtverbindungsschema ist; und

Auswählen des ersten neuronalen Netzes aus der Vielzahl von neuronalen Netzen (20-1...20-N) basierend auf dem Wahrscheinlichkeitswert, der einem konfigurierbaren Parameter entspricht, der in jedem aus der Vielzahl von neuronalen Netzen (20-1...20-N) enthalten ist.

7. Verfahren nach Anspruch 1, wobei das Auswählen eines ersten neuronalen Netzes aus der Vielzahl von Beschleunigern und eines ersten Beschleunigers zum Implementieren des ersten neuronalen Netzes aus der Vielzahl von Beschleunigern Folgendes umfasst:

basierend auf dem Auswählen des ersten neuronalen Netzes und vor dem Auswählen des ersten Beschleunigers zum Implementieren des ersten neuronalen Netzes, Vorhersagen einer Hardwareleistung des ausgewählten ersten neuronalen Netzes durch ein zweites Vorhersagemodell (50).

8. Verfahren nach Anspruch 7, wobei das Vorhersagen Folgendes umfasst:

Identifizieren, ob die vorhergesagte Hardwareleistung des ersten neuronalen Netzes ein zweites Hardwarekriterium erfüllt, und

basierend auf dem Identifizieren, dass die vorhergesagte Hardwareleistung des ersten neuronalen Netzes das zweite Hardwarekriterium erfüllt, Auswählen des ersten Beschleunigers zum Implementieren des ersten neuronalen Netzes.

9. Verfahren nach Anspruch 8, wobei das Identifizieren basierend auf dem Identifizieren, dass die Hardwareleistung des ausgewählten ersten neuronalen Netzes das zweite Hardwarekriterium nicht erfüllt, Auswählen eines neuronalen Netzes aus einer Vielzahl von neuronalen Netzen (20-1...20-N), die von dem ersten neuronalen Netz verschieden sind, umfasst.

10. Elektronische Vorrichtung (100), umfassend:

einen Speicher (110) zum Speichern einer Vielzahl von Hardwarebeschleunigern (10-1...10-N) und einer Vielzahl von neuronalen Netzen (20-1...20-N); und

einen Prozessor (120), der zu Folgendem konfiguriert ist:

Auswählen eines ersten neuronalen Netzes aus der Vielzahl von neuronalen Netzen (20-1...20-N) und Auswählen eines ersten Beschleunigers, um das erste neuronale Netz zu implementieren, aus der Vielzahl von Beschleunigern (10-1...10-N),

Implementieren des ersten neuronalen Netzes auf dem ersten Beschleuniger, um Informationen assoziiert mit der Implementierung zu erhalten,

Erhalten eines ersten Belohnungswertes basierend auf den Informationen assoziiert mit der Implementierung für den ersten Beschleuniger und das erste neuronale Netz,

Auswählen eines zweiten neuronalen Netzes, das auf dem ersten Beschleuniger zu implementieren ist, aus der Vielzahl von neuronalen Netzen (20-1...20-N),

Implementieren des zweiten neuronalen Netzes auf dem ersten Beschleuniger, um Informationen assoziiert mit der Implementierung zu erhalten,

Erhalten eines zweiten Belohnungswertes basierend auf den Informationen assoziiert mit der Implementierung für den ersten Beschleuniger und das zweite neuronale Netz, und Auswählen eines zweiten Beschleunigers aus der Vielzahl von Beschleunigern mit Ausnahme des ersten Beschleunigers, um das zweite neuronale Netz zu implementieren;

Implementieren des zweiten neuronalen Netzes auf dem zweiten Beschleuniger, um Informationen assoziiert mit der Implementierung zu erhalten;

Erhalten eines dritten Belohnungswertes basierend auf den Informationen assoziiert mit der Implementierung für den zweiten Beschleuniger und das zweite neuronale Netz;

Auswählen eines Paares aus einem neuronalen Netzes und einem Beschleuniger mit einem größten Belohnungswert aus der Vielzahl von neuronalen Netzen und der Vielzahl von Beschleunigern basierend auf dem ersten Belohnungswert, dem zweiten Belohnungswert und dem dritten Belohnungswert; und

wobei das Auswählen des ersten Beschleunigers und des zweiten Beschleunigers, um ein ausgewähltes neuronales Netz zu implementieren, Folgendes umfasst:

Eingeben der Vielzahl von Beschleunigern (10-1...10-N) in ein Richtlinienfunktionsmodell (60), um einen Wahrscheinlichkeitswert zu erhalten, der einem konfigurierbaren Parameter entspricht, der in jedem aus der Vielzahl von Beschleunigern (10-1...10-N) enthalten ist; und

Auswählen des ersten Beschleunigers und des zweiten Beschleunigers aus der Vielzahl von Beschleunigern (10-1...10-N) basierend auf dem Wahrscheinlichkeitswert, der dem konfigurierbaren Parameter entspricht;

wobei der konfigurierbare Parameter zumindest eines von Folgendem beinhaltet: einem Parallelisierungsparameter, Puffertiefe, Pooling-Motorparameter, Speicherschnittstellenbreitenparameter und Faltungsmotorverhältnisparameter.

11. Elektronische Vorrichtung nach Anspruch 10, wobei der Prozessor (120) zu Folgendem konfiguriert ist: Identifizieren, ob eine Hardwareleistung des ersten Beschleunigers und des ersten neuronalen Netzes, die durch Eingeben des ersten Beschleunigers und des ersten neuronalen Netzes in ein erstes prädiktives Modell (40) erhalten wird, ein vorbestimmtes Kriterium erfüllt, und basierend auf dem Identifizieren, dass die erhaltene Hardwareleistung das erste Hardwarekriterium erfüllt, Implementieren des ersten neuronalen Netzes auf dem ersten Beschleuniger, um Informationen assoziiert mit der Implementierung zu erhalten.

12. Elektronische Vorrichtung nach Anspruch 11, wobei der Prozessor (120) ferner konfiguriert ist, um den zweiten Beschleuniger zum Implementieren des ersten neuronalen Netzes aus der Vielzahl von Beschleunigern (10-1...10-N), die von dem ersten Beschleuniger verschieden sind, basierend auf dem Identifizieren, dass die erhaltene Hardwareleistung das erste Hardwarekriterium nicht erfüllt, auszuwählen.

13. Elektronische Vorrichtung nach Anspruch 10, wobei die Informationen assoziiert mit der Implementierung Genauigkeits- und Effizienzmetriken der Implementierung umfassen.

14. Elektronische Vorrichtung nach Anspruch 10, wobei der Prozessor (120) ferner konfiguriert ist, um die erhaltenen Genauigkeits- und Effizienzmetriken zu normalisieren und um den ersten Belohnungswert durch Durchführen einer gewichteten Summenoperation für die normalisierten Metriken zu erhalten.

## Revendications

1. Procédé permettant la commande d'un dispositif électronique (100) comprenant une mémoire (110) stockant une pluralité d'accélérateurs matériels (10-1...10-N) et une pluralité de réseaux neuronaux (20-1...20-N), le procédé comprenant :

la sélection d'un premier réseau neuronal parmi la pluralité de réseaux neuronaux (20-1...20-N) et la sélection d'un premier accélérateur pour mettre en œuvre le premier réseau neuronal parmi la pluralité d'accélérateurs (10-1...10-N) ;
la mise en œuvre du premier réseau neuronal sur le premier accélérateur pour obtenir des informations associées à la mise en œuvre ;
l'obtention d'une première valeur de récompense sur la base des informations associées à la mise en œuvre pour le premier accélérateur et le premier réseau neuronal ;
la sélection d'un second réseau neuronal à mettre en œuvre sur le premier accélérateur parmi la pluralité de réseaux neuronaux ;
la mise en œuvre du second réseau neuronal sur le premier accélérateur pour obtenir des informations associées à la mise en œuvre ;
l'obtention d'une deuxième valeur de récompense sur la base des informations associées à la mise en œuvre pour le premier accélérateur et le second réseau neuronal ;
la sélection d'un second accélérateur, parmi la pluralité d'accélérateurs à l'exception du premier accélérateur, pour mettre en œuvre le second réseau neuronal ;
la mise en œuvre du second réseau neuronal sur le second accélérateur pour obtenir des informations associées à la mise en œuvre ;
l'obtention d'une troisième valeur de récompense sur la base des informations associées à la mise en œuvre pour le second accélérateur et le second réseau neuronal ;
la sélection d'un réseau neuronal et d'une paire d'accélérateurs présentant la plus grande valeur de récompense parmi la pluralité de réseaux neuronaux (20-1...20-N) et la pluralité d'accélérateurs sur la base de la première valeur de récompense, de la deuxième valeur de récompense et de la troisième valeur de récompense,
dans lequel la sélection du premier accélérateur et du second accélérateur pour mettre en œuvre un réseau neuronal sélectionné comprend :

l'entrée de la pluralité d'accélérateurs (10-1...10-N) dans un modèle de fonction de politique (60) pour obtenir une valeur de probabilité correspondant à un paramètre configurable compris dans chacun de la pluralité d'accélérateurs (10-1...10-N) ; et
la sélection du premier accélérateur et du second accélérateur parmi la pluralité d'accélérateurs (10-1...10-N) sur la base de la valeur de probabilité correspondant au paramètre configurable ;
dans lequel le paramètre configurable comprend au moins l'un parmi : un paramètre de parallélisation, une profondeur de mémoire tampon, un paramètre de moteur de mise en commun, un paramètre de largeur d'interface mémoire et un paramètre de rapport de moteur de convolution.

2. Procédé de la revendication 1, dans lequel la sélection du premier accélérateur comprend :

le fait d'identifier si une performance matérielle du premier accélérateur et du premier réseau neuronal obtenue en entrant le premier accélérateur et le premier réseau neuronal dans un premier modèle prédictif (40) satisfait à un critère prédéterminé ; et
sur la base de l'identification du fait que la performance matérielle obtenue satisfait au premier critère matériel, la mise en œuvre du premier réseau neuronal sur le premier accélérateur pour obtenir des informations associées à la mise en œuvre.

3. Procédé de la revendication 2, dans lequel
la sélection du second accélérateur pour mettre en œuvre le premier réseau neuronal parmi la pluralité d'accélérateurs (10-1...10-N) autres que le premier accélérateur est basée sur l'identification du fait que la performance matérielle obtenue ne satisfait pas au premier critère matériel.

4. Procédé de la revendication 1, dans lequel les informations associées à la mise en œuvre comprennent des mesures de précision et d'efficacité de mise en œuvre.

5. Procédé de la revendication 1, dans lequel l'obtention de la première valeur de récompense comprend :

la normalisation des mesures de précision et d'efficacité obtenues ; et
l'obtention de la première valeur de récompense en effectuant une opération de somme pondérée pour les mesures normalisées.

6. Procédé de la revendication 1, dans lequel la sélection d'un premier réseau neuronal parmi la pluralité de réseaux neuronaux (20-1...20-N) comprend :

l'obtention d'une valeur de probabilité correspondant à un paramètre configurable compris dans chacun de la pluralité de réseaux neuronaux (20-1...20-N), ledit paramètre configurable étant au moins l'un d'un mode opérationnel de chaque réseau neuronal ou d'un schéma de connexion de couche ; et
la sélection du premier réseau neuronal parmi la pluralité de réseaux neuronaux (20-1...20-N) sur la base de la valeur de probabilité correspondant à un paramètre configurable compris dans chacun de la pluralité de réseaux neuronaux (20-1...20-N).

7. Procédé de la revendication 1, dans lequel la sélection d'un premier réseau neuronal parmi la pluralité d'accélérateurs et d'un premier accélérateur pour mettre en œuvre le premier réseau neuronal parmi la pluralité d'accélérateurs comprend :
sur la base de la sélection du premier réseau neuronal et avant la sélection du premier accélérateur pour mettre en œuvre le premier réseau neuronal, la prédiction d'une performance matérielle du premier réseau neuronal sélectionné par le biais d'un second modèle de prédiction (50).

8. Procédé de la revendication 7, dans lequel la prédiction comprend :

le fait d'identifier si la performance matérielle prédite du premier réseau neuronal satisfait à un second critère matériel, et
sur la base de l'identification du fait que la performance matérielle prédite du premier réseau neuronal satisfait au second critère matériel, la sélection du premier accélérateur pour la mise en œuvre du premier réseau neuronal.

9. Procédé de la revendication 8, dans lequel l'identification comprend, sur la base de l'identification du fait que la performance matérielle du premier réseau neuronal sélectionné ne satisfait pas au second critère matériel, la sélection à nouveau d'un réseau neuronal parmi une pluralité de réseaux neuronaux (20-1...20-N) autres que le premier réseau neuronal.

10. Dispositif électronique (100) comprenant :

une mémoire (110) destinée à stocker une pluralité d'accélérateurs matériels (10-1...10-N) et une pluralité de réseaux neuronaux (20-1...20-N) ; et
un processeur (120) configuré pour :

sélectionner un premier réseau neuronal parmi la pluralité de réseaux neuronaux (20-1...20-N) et sélectionner un premier accélérateur pour mettre en œuvre le premier réseau neuronal parmi la pluralité d'accélérateurs (10-1...10-N),
mettre en œuvre le premier réseau neuronal sur le premier accélérateur pour obtenir des informations associées à la mise en œuvre,
obtenir une première valeur de récompense sur la base des informations associées à la mise en œuvre pour le premier accélérateur et le premier réseau neuronal,
sélectionner un second réseau neuronal à mettre en œuvre sur le premier accélérateur parmi la pluralité de réseaux neuronaux (20-1...20-N),
mettre en œuvre le second réseau neuronal sur le premier accélérateur pour obtenir des informations associées à la mise en œuvre,
obtenir une deuxième valeur de récompense sur la base des informations associées à la mise en œuvre pour le premier accélérateur et le second réseau neuronal, et
sélectionner un second accélérateur, parmi la pluralité d'accélérateurs à l'exception du premier accélérateur, pour mettre en œuvre le second réseau neuronal ;
mettre en œuvre le second réseau neuronal sur le second accélérateur pour obtenir des informations associées à la mise en œuvre ;
obtenir une troisième valeur de récompense sur la base des informations associées à la mise en œuvre pour le second accélérateur et le second réseau neuronal ;
sélectionner un réseau neuronal et une paire d'accélérateurs présentant la plus grande valeur de récompense parmi la pluralité de réseaux neuronaux et la pluralité d'accélérateurs sur la base de la première valeur de récompense, de la deuxième valeur de récompense et de la troisième valeur de récompense ; et
dans lequel la sélection du premier accélérateur et du second accélérateur pour mettre en œuvre un réseau neuronal sélectionné comprend :

l'entrée de la pluralité d'accélérateurs (10-1...10-N) dans un modèle de fonction de politique (60) pour obtenir une valeur de probabilité correspondant à un paramètre configurable compris dans chacun de la pluralité d'accélérateurs (10-1...10-N) ; et
la sélection du premier accélérateur et du second accélérateur parmi la pluralité d'accélérateurs (10-1...10-N) sur la base de la valeur de probabilité correspondant au paramètre configurable ;
dans lequel le paramètre configurable comprend au moins l'un parmi : un paramètre de parallélisation, une profondeur de mémoire tampon, un paramètre de moteur de mise en commun, un paramètre de largeur d'interface mémoire et un paramètre de rapport de moteur de convolution.

**11.** Dispositif électronique de la revendication 10, dans lequel le processeur (120) est configuré pour :

identifier si une performance matérielle du premier accélérateur et du premier réseau neuronal obtenue en entrant le premier accélérateur et le premier réseau neuronal dans un premier modèle prédictif (40) satisfait à un critère prédéterminé, et
sur la base de l'identification du fait que la performance matérielle obtenue satisfait au premier critère matériel, mettre en œuvre le premier réseau neuronal sur le premier accélérateur pour obtenir des informations associées à la mise en œuvre.

**12.** Dispositif électronique de la revendication 11, dans lequel le processeur (120) est en outre configuré pour sélectionner le second accélérateur afin de mettre en œuvre le premier réseau neuronal parmi la pluralité d'accélérateurs (10-1...10-N) autres que le premier accélérateur sur la base de l'identification du fait que la performance matérielle obtenue ne satisfait pas au premier critère matériel.

**13.** Dispositif électronique de la revendication 10, dans lequel les informations associées à la mise en œuvre comprennent des mesures de précision et d'efficacité de mise en œuvre.

**14.** Dispositif électronique de la revendication 10, dans lequel le processeur (120) est en outre configuré pour normaliser les mesures de précision et d'efficacité obtenues, et pour obtenir la première valeur de récompense en effectuant une opération de somme pondérée pour les mesures normalisées.

【Figure 1】

100

【Figure 2】

【Figure 3】

START

SELECT A FIRST NEURAL NETWORK AMONG A
PLURALITY OF NEURAL NETWORKS ~S310

OBTAIN AN ESTIMATED VALUE OF HARDWARE
FUNCTION CORRESPONDING TO THE FIRST
NEURAL NETWORK THROUGH SECOND PREDICTIVE
MODEL ~S320

DOES ESTIMATED
VALUE OF HARDWARE PERFORMANCE
SATISFY THE SECOND HARDWARE
CRITERIA?
S330

Y

N

SELECT ONE OF A PLURALITY OF NEURAL
NETWORKS EXCEPT THE FIRST NEURAL NETWORK ~S340

S350
SELECT AN ACCELERATOR FOR
IMPLEMENTING THE FIRST NEURAL
NETWORK AMONG THE PLURALITY OF
ACCELERATORS

END

【Figure 4A】

```
                    ┌──────────┐
                    │  START   │
                    └──────────┘
          ┌──────────────┴──────────────┐
          ▼                              ▼
┌──────────────────────┐    ┌──────────────────────────┐
│ SELECT FIRST CNN FROM│    │ SELECT FIRST ACCELERATOR │
S400─│ A NEURAL NETWORK     │    │ FROM AN ACCELERATOR      │─S402
│ SUB-SEARCH SPACE     │    │ SUB-SEARCH SPACE         │
└──────────────────────┘    └──────────────────────────┘
          └──────────────┬──────────────┘
                         ▼
         ┌────────────────────────────┐
         │ IMPLEMENT THE FIRST CNN ON │─S404
         │ THE FIRST ACCELERATOR      │
         └────────────────────────────┘
                         ▼
         ┌────────────────────────────┐
         │ OBTAIN INFORMATION         │─S406
         │ ASSOCIATED WITH            │
         │ IMPLEMENTATION BY          │
         │ IMPLEMENTING THE FIRST CNN │
         │ ON THE FIRST ACCELERATOR   │
         └────────────────────────────┘
                         ▼
         ┌────────────────────────────┐
         │ OBTAIN A REWARD VALUE      │─S408
         │ BASED ON INFORMATION       │
         │ RELATED TO THE OBTAINED    │
         │ IMPLEMENTATION             │
         └────────────────────────────┘
                         ▼
         ┌────────────────────────────┐
         │ USE THE OBTAINED REWARD    │─S410
         │ VALUE FOR SELECTING OR     │
         │ UPDATING A PAIR OF         │
         │ OPTIMIZED CNN AND          │
         │ ACCELERATOR                │
         └────────────────────────────┘
                         ▼
                    ┌──────────┐
                    │   END    │
                    └──────────┘
```

35

【Figure 4B】

【Figure 4C】

【Figure 5】

[Figure 6]

EP 3 966 747 B1

402

System-on-Chip

404

Memory
Controller

CPU (ARM)
• Control unit and scheduler
• Runs unsupported layers (e.g.softmax)

mem_interface_width={256,512} bits

FPGA

External
Memory
(DDR4)

414
Input Buffer
depth={1,2,4,8} Kbit

416
Weights Buffer
depth={1,2,4} Kbit

418
Output Buffer
depth={1,2,4} Kbit

410
Convolution Engine(s)
filter_par={8,16}
pixel_par={4,8,16,32,64}
ratio_conv_engines=
{1,0.75.0.67,0.5,0.33,0.25}

412
Pooling Engine
pool_enable={0,1}

400

【Figure 7A】

【Figure 7B】

【Figure 8】

【Figure 9】

【Figure 10】

【Figure 11A】

area < 55 $mm^2$

【Figure 11B】

area < 70 $mm^2$

【Figure 11C】

area < 150 $mm^2$

【Figure 11D】

area < 220 $mm^2$

【Figure 12A】

【Figure 12B】

【Figure 12C】

【Figure 12D】

【Figure 13】

【Figure 14】

【Figure 15A】

**Unconstrained**

【Figure 15B】

1 Constraint

【Figure 15C】

2 Constraints

【Figure 16A】

【Figure 16B】

【Figure 16C】

【Figure 17】

【Figure 18A】

Cod-1
(Input projections omitted)

【Figure 18B】

Cod-2

【Figure 19】

EP 3 966 747 B1

【Figure 20】

【Figure 21】

【Figure 22】

START

RECEIVE THE PROPOSED NEURAL NETWORK MODEL — S1600

RECEIVE PREDICTED HARDWARE METRICS — S1602

S1604 — ARE THE PREDICTED HARDWARE METRICS RELIABLE? — N

Y

N — DO THE PREDICTED METRICS NEED TO BE VERIFIED? — S1606

S1608

USE PREDICTED PARAMETER

Y

EXECUTE THE NEURAL NETWORK MODEL PROPOSED BY HW — S1610

UPDATE STATISTICAL MODEL — S1612

USE MEASURED HW PARAMETERS — S1614

END

## REFERENCES CITED IN THE DESCRIPTION

**Non-patent literature cited in the description**

- **JIANG et al.** Accuracy vs. Efficiency: Achieving Both Through FPGA-Implementation Aware Neural Architecture Search. *arXiv e-prints*, January 2019
- **WEIWEN JIANG et al.** *Hardware/Software Co-Exploration of Neural Architectures*
- **YING et al.** NAS Bench 101: Towards Reproducible Neural Architecture Search. *arXiv e-prints*, February 2019
- Chaidnn v2 - HLS based Deep Neural Network Accelerator Libray for Xilinx Ultrascale+ MPSoCs. Xilinx Inc, 2019
- **ABDELFATTAH et al.** Design Tradeoffs for Hard and Soft FPGA-based Network on Chips. *International Conference on Field Programmable Technology*, 2012, 95-103
- **BRANKE et al.** Multiobjective Optimization, Interactive and Evolutionary Approaches. Springer, 2008
- **MARLEZ et al.** Function-Transformation Methods for multi-objective optimization. *Engineering Optimization*, 2005, vol. 37 (6), 551-570
- **YING et al.** NAS-Bench-101: Towards Reproducible Neural Architecture Search. *arXiv e-prints*, February 2019